Europäisches Patentamt

European Patent Office

Office européen des brevets

(19)

(11) Publication number: **0 089 151**
**B1**

(12)

# EUROPEAN PATENT SPECIFICATION

(45) Date of publication of patent specification: **10.06.87**

(51) Int. Cl.⁴: **A 01 F 29/04**

(21) Application number: **83301147.1**

(22) Date of filing: **03.03.83**

(54) **Multiple-disc comminution apparatus.**

(30) Priority: **03.03.82 GB 8206252**

(43) Date of publication of application:
**21.09.83 Bulletin 83/38**

(45) Publication of the grant of the patent:
**10.06.87 Bulletin 87/24**

(84) Designated Contracting States:
**DE FR NL**

(56) References cited:
**AT-B- 251 339**
**DE-C- 651 157**
**DE-C-1 088 280**
**DE-U-1 634 496**

(73) Proprietor: **NATIONAL RESEARCH
DEVELOPMENT CORPORATION
101 Newington Causeway
London SE1 6BU (GB)**

(72) Inventor: **Klinner, Wilfred Erwin
Beechwood Heath Lane Aspley Heath
Woburn Sands Milton Keynes Bucks. (GB)**
Inventor: **Knight, Andrew Charles
2 Tarnside Close
Dunstable Bedfordshire (GB)**

(74) Representative: **Trevor-Briscoe, David William
Patent Department National Research
Development Corporation 101 Newington
Causeway
London SE1 6BU (GB)**

## Description

The present invention relates to an apparatus for comminuting cut crop using a multi-disc slicing rotor.

It is a drawback of existing designs of this type operating with chop lengths of around 50 mm, that for the chopped crop to be thrown free of the rotor to keep the inter-disc spaces free of crop, the rotational speed of the rotor has to be maintained so high that a large proportion of the total energy requirement is needed just to accelerate the crop. In addition, serious overheating of the cutting discs is likely to occur due to frictional effects between the crop and the fast-moving discs.

For examples of such designs, reference may be made to the paper by Guth in Landtechnische Forschung, Volume 2, Number 3 (1952) which discusses systems in which the single-bevel discs of a fast-rotating multi-bladed cutting rotor are spring-loaded laterally into frictional contact with a corresponding array of coarsely of finely-serrated crop-feed discs. Another example is given by Dernedde & Peters in special edition No. 8 of Landbauforschung Volkenrode 1970, where peripheral cutting disc speeds of around 50 metres per second are required if the crop is to be thrown free from the rotor as above described.

The Guth paper also refers to what may be termed a "minimum clearance" arrangement in which an array of double-bevel cutting discs co-operates with a rubber roller into which the discs intrude, in time cutting permanent grooves therein. Although relatively low cutting disc speeds are proposed for this last design, it is clear that these speeds are only acceptable in the context of chopped dry straw as the crop and as little as three tons per hour as a typical throughput. Even under such extremely favourable conditions (the sliding friction of chopped dry straw is very low indeed), the problem of inter-blade blockage is acknowledged by Guth as being the limiting factor. It is, in fact, inconceivable that such a device could be operated satisfactorily at such speeds with other crops, such as fresh or wilted green forage crops for example. In this latter case, peripheral cutting disc speeds of around 50 metres per second would once again be required even assuming, for the sake of argument, that the disclosed chopping mechanism could be made to work with such crops.

In addition to the various crop-chopping devices described above, it is also known to employ multi-disc cutting rotors in other contexts e.g. in slicing tobacco or fruit peel, but in each case the cutting and/or the feed mechanism involved makes these systems inherently unsuited for crop-chopping purposes and their disclosure and intended use is not such as to render them otherwise relevant to the teachings of the present invention.

Mention must also be made of DE—C—651 157 which discloses a comminuting apparatus in which two sets of interacting cutting discs are used. It is a drawback of this system that because each set of discs is capable of cutting the material, neither provides a satisfactory means for holding the material against the cutting action of the other and as a consequence a correspondingly lesser proportion of the crop will be chopped to the desired length. This will result in a lower density material and hence an inferior quality of silage. In addition, apart from being relatively complex to manufacture and maintain, the double cutting-disc arrangement also suffers from the disadvantage of providing a less well-defined discharge because each set of discs on cutting the material will tend to discharge the material in a direction tangential to the rotary motion of those discs.

To summarise, therefore, none of the prior art systems discussed above in any way discloses or suggests any arrangement for efficiently chopping crops to a nominal length of 50 mm or less at the relatively slow cutting disc speeds associated with acceptable energy losses and acceptably low operating temperatures.

Bearing this in mind, it is an object of the present invention to provide a new design of multiple disc comminution apparatus in which the drawbacks outlined above are avoided or at least significantly reduced, preferably even when the nominal chop length of the device is as little as 25 mm or less.

In this context, and elsewhere in the Application, the nominal length of the chopped crop is to be taken as being equal to the inter-disc spacing in the crop-slicing rotor concerned.

According to the present invention, an apparatus for comminuting cut crop comprises a multiple disc slicing rotor and crop extraction means intruding into or passing through the inter-disc spaces for removing comminuted crop from the rotor and is characterised by comprising co-operating means presenting only non-cutting surfaces to the crop and intermeshing with the discs of the slicing rotor to support the crop during slicing and direct the crop into the inter-disc spaces. Thereby the requirement for high rotational speeds is avoided and the slicing rotor need only be rotated at whatever peripheral speed is convenient in the circumstances to provide efficient slicing of the crop and satisfactory levels of throughput.

Conveniently, the apparatus of the present invention has an inter-disc spacing of 50 mm or less (and preferably 25 mm or less) and includes rotor drive means adapted to drive the rotor discs with a peripheral speed somewhere in the range 0.2 to 25 metres per second. Typical values will lie somewhere in the range 0.4 to 15 metres per second, the range 0.6 to 5 metres per second being preferred.

Conveniently, the co-operating means takes the form of an interdigitating roller or discs assembly and the apparatus may include co-operating assembly drive means adapted to drive the co-operating roller or discs assembly with a peripheral speed in the approximate preferred range of 0.5 to 10 metres per second.

Conveniently, the co-operating means supports the crop on either side of each cutting disc thereby to provide double shear cutting of the crop.

Although the discs of the slicing rotor are preferably circular or substantially circular, regular polygonal discs may be used instead if desired, e.g. discs with six or more sides, or discs of elliptical, or multi-lobed shape.

Conveniently, the discs are of a composite structure comprising a relatively thin crop-slicing section and a more robust support section to which the slicing section is replaceably attached.

Conveniently, the discs, or in the latter case, the crop-slicing sections of the discs, are coated with PTFE (polytetrafluoroethylene) or other similar low-friction material so as to reduce the crop-to-disc friction.

Conveniently, the co-operating means takes the form of an appropriately slotted support or ledger plate assembly but a series of individual packer arms or a recessed interdigitating roller or discs assembly are preferable alternative arrangements.

Conveniently, in these last two cases, the apparatus includes drive means for driving the interdigitating roller or disc assemblies and according to a preferred feature, the drive means operates to provide a difference, in either sense, between the peripheral speeds of the co-operating means and the slicing discs thereby to help achieve clean shearing of the crop and so further reduce the power requirement.

In some embodiments of the invention where the co-operating means takes the form of a recessed interdigitating roller, this roller conveniently also provides the crop-extraction means.

Where the co-operating means is provided by packer arms, then conveniently the packer arms are biased individually or in groups, e.g. small groups, towards the crop slicing rotor so as to be temporarily and separately retractable should an unyielding object arrive in the crop feed of the apparatus.

Conveniently, the packer arms are pivoted either upstream or downstream of the slicing rotor.

Conveniently, the apparatus includes a driven eccentric shaft for agitating the packer arms thereby to improve their crop-conveying and space-loading capabilities.

Conveniently, when the co-operating means comprises a retractable roller or discs assembly, or a plurality of independently mounted roller sections or discs, or individually biased packer arms, then the apparatus also includes feedback means optionally adapted automatically to interrupt the crop flow through the apparatus in response to an excessive displacement of the retractable roller or disc assembly as the case may be.

According to another feature of the invention, the apparatus preferably includes feed means for feeding a stream of crop to the crop-slicing rotor. When rollers are used for this purpose, they conveniently comprise at least a pair of co-operating feed rollers preferably preceded by a pair of co-operating pre-feed rollers.

Conveniently, in this latter case, the apparatus includes drive means adapted to rotate the feed rollers with a lower peripheral speed than the pre-feed rollers thereby to provide favourable transverse alignment of the crop at the crop-slicing rotor.

By "favourable transverse alignment" in this context and in the accompanying claims is meant alignment of the crop stems with the width dimension of the apparatus i.e. transversely to the overall direction of crop flow through the apparatus.

Conveniently, the rollers are arranged in vertical pairs or staggered one after the other in which case either the uppermost (or lowermost) roller or each pair is rotated with a slower peripheral speed than the other roller of that pair or (if the rollers are staggered) each roller is rotated with a slower peripheral speed than the preceding roller.

Conveniently, the feed rollers and/or the pre-feed rollers carry longitudinally extending ribs, preferably extending longitudinally along the rollers so as to encourage transverse alignment of the chopped crop.

Conveniently, in this case, the ribs on the feed rollers may be helical ribs twisted in the same sense to one another and/or the ribs on the pre-feed rollers may be helical ribs twisted in the same sense to one another.

Conveniently, where the apparatus comprises a pair of vertically separated feed rollers and a pair of vertically separated pre-feed rollers as above described, then the apparatus includes drive means adapted to rotate the uppermost or lowermost rollers of each pair with a slower peripheral speed than the other roller of that pair.

Alternatively, where the feed and/or pre-feed rollers are staggered, then the apparatus conveniently includes drive means adapted to rotate each roller with a slower peripheral speed than the preceding roller.

Conveniently, the apparatus includes control means for varying the relative rotational speeds of the different rollers.

Conveniently, the rotation axes of the pre-feed rollers are inclined to the axes of the feed rollers so as to create in the crop a variable density producing increased lateral alignment of the crop.

Conveniently, when the co-operating means presents only non-cutting surfaces to the crop, then the co-operating means takes the form of an interdigitating recessed roller and the interdigitating parts of this roller are slightly contoured at their crop-contacting faces so as to improve the action of the roller in directing crop towards and into the crop-slicing rotor.

Alternatively, when the co-operating means presents only non-cutting surfaces to the crop, then the co-operating means may take the form of a series of discs mounted on a common shaft with one co-operating disc between each pair of crop-slicing discs.

It is a problem of existing designs of multiple-disc comminution apparatus using centrifugal force to throw the crop free of the rotor, that because of the high rotational speeds involved, the presence of foreign objects in the crop stream will almost invariably produce substantial damage in the machine even when, as suggested in the Dernedde & Peters paper, the cutting rotor is capable of swinging away from the co-operating guide discs in response to an overload situation. Although the much slower operational speeds of Guth's minimum clearance straw-chopper may enable it to overcome this problem, it is subject instead to the disadvantage that when overloading does occur, the resilience of the roller will be overcome and a large proportion of the crop will go through uncut.

The slow peripheral speeds of the crop-slicing discs in the apparatus of the present invention also largely allow it to overcome this problem and the risk of serious damage can be further lessened, if desired, by having the slicing rotor and/or the co-operating means able temporarily to retract on the arrival there of any unyielding object picked up with the cut crop.

Conveniently, when the co-operating means takes the form of an interdigitating roller or discs assembly, then this assembly is one of two such assemblies, one of which is retractable as above described. With this latter arrangement, should an unyielding object arrive in the crop feed to the apparatus, only one (for example, the downstream one) of the two co-operating assemblies will retract leaving the other one in mesh with the rotor discs. This continuous meshing of the rotor discs with at least one of the co-operating assemblies will stabilise the discs and facilitate intermeshing with the retracted co-operating assembly when this latter returns to its original position.

A further refinement is that the crop supporting recessed roller is divided into a number of individually spring-loaded sections with can retract independently so that minimum interruption of the cutting process is caused and the load on the knife discs is small when a foreign object passes through.

Conveniently, in this last arrangement, the retractable assembly is located downstream of the disc-stabilising assembly.

When an interdigitating recessed roller is used, it may be constructed of, or covered by, a layer of resilient material initially providing a non-recessed resilient outer surface into which the crop-slicing edges of the discs can intrude to give at least some degree of interdigitation. After a certain amount of use, the resilient outer surface of such a roller will become incised so that interdigitation will no longer be wholly dependent upon the resilience of the outer surface of the roller.

With what may be termed a "minimum-clearance" resilient roller system as above described, the peripheral speeds of the rotor discs and the co-operating roller are preferably substantially identical. If, instead, the co-operating roller is provided with circumferential recesses designed to register with and accept at least the radially outer regions of the discs, then drive means are provided so that there is at least a marginal difference (in either sense) between the peripheral speeds of the rotor discs and the roller to keep the roller recesses substantially free of crop fragments, maximise the crop shearing effect and minimise the power requirement to achieve comminution.

With the recessed roller referred to above, the depth of the recesses may lie at a value anywhere between a few millimetres and one equal to the maximum radius of the roller less its core radius.

Although the interdigitating parts of the co-operating roller will usually have a smooth surface they may, if desired, instead be contoured at their crop-contacting faces so as to improve the action of the roller in directing crop towards and into the crop-slicing rotor.

As an alternative to a recessed roller, the co-operating means may, as already indicated, take the form of a series of arms or of discs mounted on a common shaft.

Conveniently, these disc-type co-operating means are arranged with one co-operating disc between each pair of crop-slicing discs. In this case, the side forces on the crop-slicing discs are preferably equalised and minimised by having these discs sharpened to give a central or alternating cutting edge, e.g. of plain, scalloped, serrated or saw-tooth form.

In another embodiment, each disc-type co-operating means interacts with an associated crop-slicing disc in a scissors-like action. In this case, the non-adjacent faces of each pair of interacting slicing and co-operating discs are preferably sharpened in opposite directions to one another so that, in operation of the apparatus, crop pressure urges them together.

In variations of this latter embodiment, slightly cone shaped discs are used for both the crop-slicing means and the co-operating means. The cone shape of the discs discourages disc deflection and results in a positive scissors action when the slicing means is in operation. Preferably, in this case, the slicing discs are spring loaded towards the co-operating discs and/or *vice versa*.

In a further embodiment, the discs of the disc-type co-operating means are arranged in pairs with the discs of each said pair just sufficiently spaced to accommodate the crop-slicing discs between them. This minimum clearance between the slicing and co-operating discs is thought to aid crop comminution. Conveniently, in this case, the crop-slicing discs and the co-operating discs are shared between two drive shafts with each shaft supporting discs of both types.

Clearly the lateral spacing-apart of the crop-slicing discs will determine how finely the crop is to be comminuted i.e. the so-called "median length" of the comminuted crop. If desired this spacing may be substantially constant across the width of the crop stream. Alternatively, it may lessen (e.g. progressively) in regions of (e.g. increasingly) unfavourable crop alignment and *vice versa*. Thus in some embodiments, where the crop is fed to the crop-slicing rotor through a duct, the inter-disc spacing of the crop-slicing discs will preferably lessen towards the side of the duct so as to enable the apparatus better to deal with any crop which is unfavourably aligned there as a result of the crop being folded round when it is fed into the duct inlet.

It is a feature of the apparatus of the present invention that, depending on the type of material being cut, the comminuted crop would accumulate in the spaces between the slicing discs if the inter-disc spacing is appreciably less than 100 mm, were it not for the action of the crop-extracting means.

Conveniently, the crop-extracting means is provided by a rotating interdigitating recessed roller or discs assembly or it may instead be provided by rigid or flexible strap members positioned or passing between pairs of adjacent crop-slicing discs or by a rigid or semi-rigid comb-like crop-extracting means supported on an external framework or by rings or loops which are loosely inserted into the inter-disc spaces.

Although when strap members are used, these may, for example, start from any point upstream or downstream of the slicing rotor and terminate at the same or any other convenient point upstream or downstream of the rotor, in a preferred arrangement the strap members start from a point upstream of the crop-slicing discs or from the centre of the rotor and terminate downstream of the rotor. It is preferred that extractor means are present at the rotor core radially opposite the region in which cut crop is forced into the inter-disc spaces. Loose collars, bearings or pulleys are preferably provided on the rotor shaft to prevent chafing.

Normally the strap members are held static but, if they are made of flexible strapping or belt material or chain, then loops or circuits may be formed if desired e.g. by supporting the material outside the slicing rotor on guide rollers, pulleys or sprockets. To spread any wear, the loops may be allowed to idle or they may be driven by the rotor core or from one of the guide rollers at speeds which may be slower or faster than the peripheral speed of the slicing discs.

To limit the build-up of density of comminuted crop directed into the spaces between the crop-slicing discs, driven crop extracting straps may be provided with protrusions such as spikes, dowels, etc. which positively move the comminuted crop particles so that only a limited increase is allowed in the density of crop directed by the co-operating means into the inter-disc spaces. In a preferred arrangement, however, the moving straps are capable of conveying the crop particles away from the inter-disc spaces at a faster rate than that at which they are deposited.

Conveniently, the tips of the protrusions will miss the co-operating means by at least a small margin, though they may be allowed to contact the co-operating means provided their tip speed is the higher. The protrusions may be made of resilient material, and they may be separately attached components or part of the surface profile of the crop-extracting straps or belts.

Conveniently, the apparatus of the present invention includes feed means adapted to supply the crop to the crop-slicing rotor as a relatively low-density thin-layer stream.

A suitable feed means for this purpose takes the form of one or more belt conveyors or feed rollers. As alternatives, travelling tines or feed forks might be used instead or, in some cases, a piston.

Although, as above indicated, a single belt conveyor can be used if desired, it is normally preferred to use two such conveyors e.g. with the two conveyors spring-biassed towards each other and/or converging towards the delivery end of the feed means to pre-compact the sandwiched crop prior to comminution.

Where two belt conveyors are used in this way, they may optionally be driven with a speed differential between the belts so that longitudinal compacting, stem-crumpling and transverse aligning or possibly rolling effects may be achieved in at least some of the crop during feeding.

To improve their gripping and conveying ability, the one or more belt conveyors may be cleated or ribbed.

As above indicated, feed rollers may be used instead of belt conveyors if preferred. Conveniently, in this case, the feed rollers comprise a succession of such rollers all at one level. In an alternative arrangement, however, the feed rollers comprise one or more pairs of counter-rotating rollers with the crop sandwiched between the upper and lower rollers of the one or more pairs.

To improve their gripping and conveying ability, the feed rollers may be corrugated or multi-sided in cross-section and/or they may have transverse plain, scalloped or serrated ribs.

In the majority of embodiments, it is preferred that the feed means supply the crop to the crop-slicing rotor as a relatively low-density thin-layer stream and in these cases, travelling tines or feed forks may be used instead of the belt conveyors and feed rollers referred to above. Typically, these tines or feed forks might be suspended from an overhead mechanism such as a slatted chain.

As an alternative to a low-density thin-layer crop feed, it is envisaged that in some cases it may be more convenient to provide the crop in a more highly compacted state, and in this case, the feed means might comprise a piston working in a crop-advancement duct.

Whether the crop is being fed to the crop-slicing rotor in low-density or more highly-compacted form, it will normally be advantageous for the herbage stems and leaves to lie at 45° or more to the direction of movement of the crop through the apparatus and indeed the stems and leaves will preferably lie transversely or substantially transversely to that direction. Accordingly, in preferred arrangements, the feed means is designed to influence crop alignment favourably or it is preceded by an input means operative to promote these favourable crop orientations.

One such input means comprises a tine bar pick-up followed by an auger and/or fork or push-bar type feed mechanism.

As an alternative, the input means might comprise a rotating pick-up brush and either a brush or serrated concave or a counter-rotating feed brush co-operating with the pick-up brush to define between the two brushes a narrow passage in which favourable orientation of the cut crop will occur during operation of the input means.

Conveniently, the brushing surface of at least one of the rotating brushes is substantially parallel to the rotation axis of that brush and the end faces of the brush are at an angle of other than 90° to said axis. In this case, the planes of individual brush elements or filaments or rings of filaments of any such brush may be at said angle of other than 90° to the said axis. Alternatively, at least one said brush may be constructed of separate tufted rings set at a slight angle to the axis of rotation of the brush. Further information about the above arrangement may be had from GB—A— 2 061 095.

For example, the brush elements or filaments or the, or one of the, said brushes may be arranged in a first spiral and the brush elements or filaments of the other of said brushes may be arranged in a second spiral of opposite operative direction to the first spiral.

In preferred embodiments, however, the pick-up rotor is made up of uni-directionally slanted or reverse-slanted plastic crop-engaging elements.

In all embodiments of the invention, it is preferable, as far as practicable, to protect the apparatus against damage by foreign objects. One way of doing this has already been described above, namely to have the crop-slicing rotor and/or the co-operating means momentarily retractable. A convenient way of achieving this result is, for example, to have one of these two items spring-loaded and/or pivotally mounted in such a way that it can retract from the other of the two items momentarily sufficiently for the object concerned to pass between.

As an alternative, the drive to the shafts of the crop-slicing rotor and/or the co-operating roller may instead be provided with a shear bolt or with a clutch automatically operating to disconnect the drive if and when an unyielding object reaches the rotor. Preferably in both these cases, there will be a feed back of information from the rotor shaft to the feed drive so that the supply of crop will cease whenever the crop-slicing rotor is brought to a standstill. In this situation, the operator may be informed of the interruption e.g. by a visual or audible signal, so that he can take appropriate action, e.g. stopping the forward movement of the operating tractor.

As far as the feed means is concerned, it will be appreciated that where pairs of feed rollers or conveyor belts are used for this purpose, then a degree of protection against unyielding objects in the crop stream will usually be present as a matter of course if, as is usually the case, the feed rollers or belt conveyors are spring-biassed to respond to varying crop loads.

Conveniently, when the feed means is adapted to supply the crop as a relatively low-density thin-layer stream, then the apparatus includes drive means for the feed means, said drive means being adapted to drive the feed means with a speed not normally exceeding 4 metres per second but in some circumstances 3 times that speed or over.

Conveniently, the diameters of the crop-slicing discs lie somewhere in the range 150 millimetres to 500 millimetres, preferably 200—400 mm and most preferably 250—350 mm.

When the co-operating means is provided by an interdigitating roller assembly, the diameter of the roller is conveniently somewhere in the range between 100 mm and 400 mm.

When the feed means is in the form of rolls, these are conveniently of 150 mm to 300 mm diameter.

Conveniently, the thickness of the crop-slicing discs is somewhere in the range 1 mm to 5 mm, values of around 1.5 to 3 mm being usually preferred.

The invention also includes agricultural crop harvesting and crop processing equipment employing the comminution apparatus of the present invention and any other comminution machinery employing and benefitting from the comminution apparatus of the present invention, e.g. machinery for comminuting long fibrous materials.

Embodiments of the invention will now be described, by way of example only, with reference to the accompanying drawings, in which:—

Figures 1 to 4 are partially diagrammatic side views of different embodiments of the invention using stationary strap members to extract crop from the inter-disc spaces of the crop-slicing rotor, Figure 3a being a cross-section of part of the Figure 3 embodiment;

Figure 5 is a partially diagrammatic side view of an embodiment of the invention using a recessed roller or series of discs to extract crop from the inter-disc spaces of the crop slicing rotor;

Figures 6 and 7 are partially diagrammatic side views of alternative embodiments of the invention using moving strap members to extract crop from the inter-disc spaces of the crop-slicing rotor;

Figure 7a shows on an enlarged scale, a variation in the embodiment of Figure 7;

Figure 8 is a partially diagrammatic side view of another embodiment of the invention using stationary strap members to extract crop from the inter-disc spaces of the crop-slicing rotor;

Figures 9 to 14c and 16 are partially diagrammatic side views of harvesters or parts of harvesters employing different designs of crop comminution apparatus according to the invention;

Figure 15 is a partially diagrammatic plan view of an alternative design of feed arrangement for the comminution apparatus of the present invention;

Figures 17 and 18 are partially diagrammatic side views of other embodiments of the invention respectively using a comb-like device and anchored loops to remove crop from the inter-disc spaces of the crop-slicing rotor;

Figures 19 and 19a are partially diagrammatic side views of an embodiment of the invention using loosely mounted hoops to extract crop from the inter-disc spaces of the crop-slicing rotor;

Figures 20 and 20a are partially diagrammatic side and end views of a further embodiment of the invention using particular disc and crop presentation arrangements;

Figure 20b is a partially diagrammatic end view of a modified form of the embodiment of Figures 20 and 20a;

Figures 21 and 21a show end and side views of the crop-slicing rotor assembly;

Figures 22 to 22c and 22d show alternative cutting edge designs for the crop-slicing discs of Figures 21 and 21a;

Figure 23 is a scrap side view of a composite disc structure;

Figure 23a is part of that structure shown on an enlarged scale;

Figure 23b is a cross-section taken along the line A—A in Figure 23; and

Figure 23c is part of that cross-section shown on an enlarged scale.

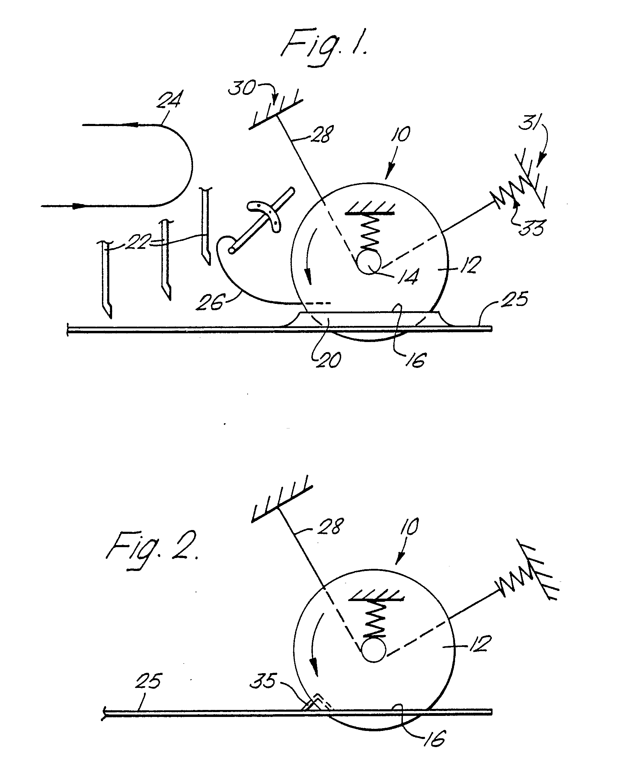

Thus referring first to Figure 1, an apparatus for comminuting cut crop according to the present invention comprises a multiple disc rotor 10 having its crop-slicing discs 12 spaced apart along a spring-loaded support shaft 14.

The slicing portions of these discs protrude through associated slots 16 pressed upwardly into a base support 18.

The co-operating means in this case is provided by the upstands 20 formed when the slots 16 are pressed out, the minimum clearance at the leading edge of the discs 12 resulting in an efficient cutting action of the crop.

The crop feed is provided by travelling feed tines 22 which extend downwardly from an overhead support system such as a slatted chain. In operation, the chain or equivalent device moves the tines 22 over the closed path indicated diagrammatically at 24, to force a relatively thin layer of crop over the support plate 25 towards the discs 12.

The apparatus is completed by adjustably spring-loaded spring steel strips 26 which extend into the inter-disc spaces at the delivery end of the feed mechanism to ensure that a pre-compacted crop layer is formed. By having the crop layer slide up the small ramp portions provided in front of each disc by the leading parts of upstands 20, any dragging effect the cutting knives might otherwise have on the crop is minimised.

During operation of the apparatus above described, the upstands 20 will interact with the rotating discs 12 to comminute the crop and to direct the comminuted crop between adjacent cutting discs of the rotor 10 as above described. The spring loading of rotor 10 will allow the rotor to retract from its operative position whenever necessary to allow unyielding objects to pass through the apparatus without significant damage to the rotor discs 12.

The crop is extracted from the inter-disc spaces by flexible straps 28 suspended between two fixing points 30, 31 located above the discs 12 and one on each side of the rotor shaft 14, i.e. upstream and downstream of the discs 12. A spring 33 is provided at the downstream end of each strap or groups of straps so that adequate tension is maintained should the rotor have to ride up and over a hard object during operation of the apparatus as above described. Alternatively, the securing point 30 for the straps 28 may be in any other position moved clockwise towards, and indeed up to, the second securing point 31.

As already indicated in the introductory portions of the specification, without the straps 28, the comminuted crop would tend to remain trapped at slow rotational speeds and cutting discs spacings of less than approximately 100 mm, more or less as a solid mass, in the inter-disc spaces of the slicing rotor 10.

The embodiment of Figure 2 differs from that of Figure 1 in having the slots 16 cut into the base plate instead of being pressed into the plate. Accordingly, the upstands 20 of the previous embodiment are additionally replaced by a continuous length of angle bar 35 to present the crop at a more favourable cutting angle. The rear edge of bar 35 is slotted to register with discs 12.

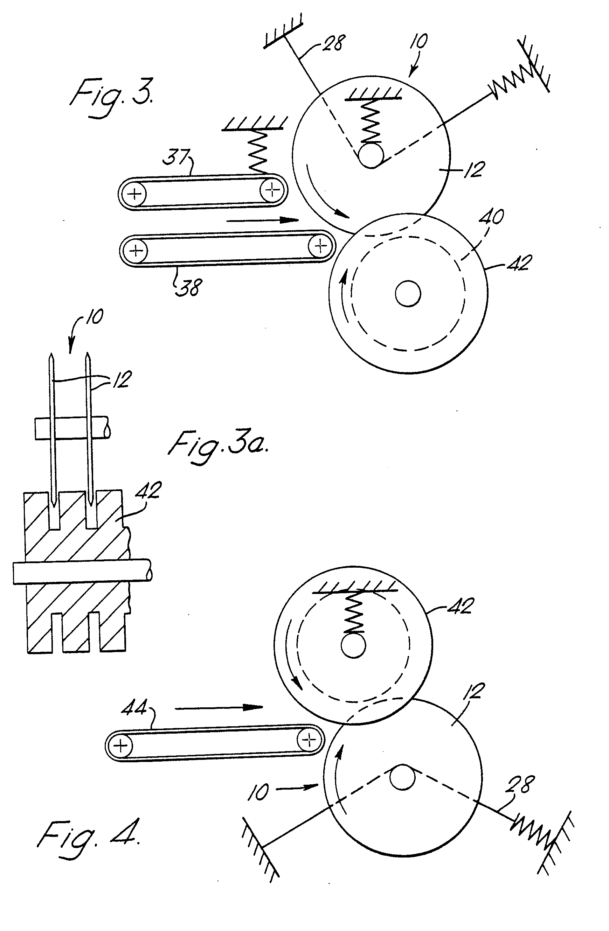

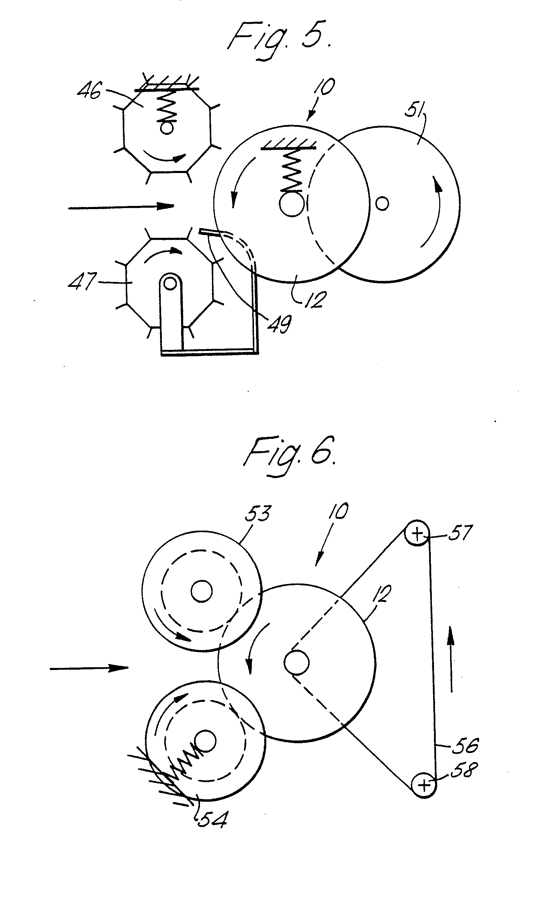

In the embodiment of Figures 3 and 3a, the crop is delivered to the rotor by two belt conveyors 37, 38, the upper conveyor 37 being spring-loaded towards the lower at the delivery end to precompact the crop. After leaving conveyors 37, 38 the crop is once again sliced by a series of axially separated discs 12 which this time register with recesses 40 in a supporting roller 42 located beneath the discs to provide an appropriate co-operating means. The spring-loading of crop-slicing rotor 10 allows the rotor to retract when necessary so as to allow unyielding objects to pass through the apparatus without significant damage to the disc 12. Crop extraction from the inter-disc spaces is achieved in the same way as in the previous embodiment.

In the normal operative position, the clearance between the crop-slicing rotor 12 and the lower crop conveyor 38 is minimal so that the crop layer is sliced nearly completely into strips before it is directed by the supporting roller 42 into the inter-disc spaces on completion of the comminutive process.

Although in the embodiment of Figure 3, as with other embodiments using recessed crop-supporting rollers as the co-operating means. the interdigitating parts of the roller 42 overlap about the outer third of the crop-slicing discs, other overlaps may be chosen instead if desired and consequently, as already indicated, the depth of the recesses, in practice, may lie at a value anywhere between a few millimetres and one equal to the radius of the roller less its core radius.

In a variation (not shown) of the Figure 3 embodiment, the belt conveyors 37, 38 converge in the direction of crop travel to provide or assist in the crop-compaction process.

In another variation, the belt conveyors 37, 38 are arranged to be driven with a speed differential between the belts so as to promote a longitudinal compacting, stem crumpling, lateral spreading and, in extreme cases, even a rolling effect on at least some of the crop before it reaches the rotor 10.

In the embodiment of Figure 4, only a single belt conveyor 44 is used for the crop feed and the positions of the crop-slicing discs 12 and supporting roller 42 are reversed. This arrangement does not allow the partial pre-slicing of the crop layer possible in the Figure 3 embodiment.

It will be remembered that both Figures 3 and 4 are partially diagrammatic representations, and in practice the belt conveyors 37, 38 and 44 will preferably be cleated or ribbed so that they grip and convey the crop that much more positively towards the rotor discs 12.

In the embodiment of Figure 5, a pair of multi-sided plain-ribbed counter-rotating feed rollers 46, 47 sandwich the crop between them so as to deliver it in pre-compacted form into the path of the usual multi-disc rotor 10. In this embodiment, the co-operating means is provided by a stationary slotted support or ledge plate 49 located immediately behind the lower feed roller 47 so as to intrude marginally into the inter-blade spaces of the crop-slicing rotor.

Instead of using the extraction straps of the earlier described embodiments, comminuted crop is this time extracted from the inter-blade spaces by a recessed roller 51 which interdigitates with the crop-slicing discs 12 and rotates in the same direction as these discs. The roller may be made totally or in part of plastics or other synthetic materials.

As in other similar embodiments, it is essential that the interdigitating parts of the extraction roller be of substantially circular cross-section. However, in a preferred version of this embodiment, these parts are serrated or otherwise contoured so as to improve the action of the roller in extracting crop from the rotor 10.

It will be noted that in the embodiment of Figure 5, both the upper feed roller and the crop-slicing rotor 10 are spring-biassed so as to be able to retract when necessary to allow an unyielding object to pass through the apparatus without causing significant damage to either the roller ribs or the slowly rotating cutting discs.

In the embodiment of Figure 6, the co-operating means is provided by a pair of recessed rollers 53, 54 delivering crop to the crop-slicing rotor 10. As will be seen from the Figure, the lower recessed roller is spring-loaded towards the rotor 10 so that it is able to retract from the rotor when necessary to allow foreign objects to pass without damage to the discs 12. The upper roller 53 remains, however, in permanent engagement with rotor 10 so that support is maintained for the discs 12 at their periphery and re-engagement with support roller 54 is ensured without fouling.

In this embodiment, material is extracted from the inter-blade spaces by loops of flexible strapping material or flat or V-form belts 56 which are supported on guide rollers 57, 58 and loose collars, bearings or pulleys (not shown) placed over the rotor shaft. To spread wear, loops 56 may be allowed to idle or one of the two guide rollers 57, 58 may be used to drive the loops faster, or slower than the slicing disc periphery. Alternatively, when a slow drive is to be used, this may conveniently be obtained by direct contact of the loops with the rotor shaft itself or with pulleys secured to it.

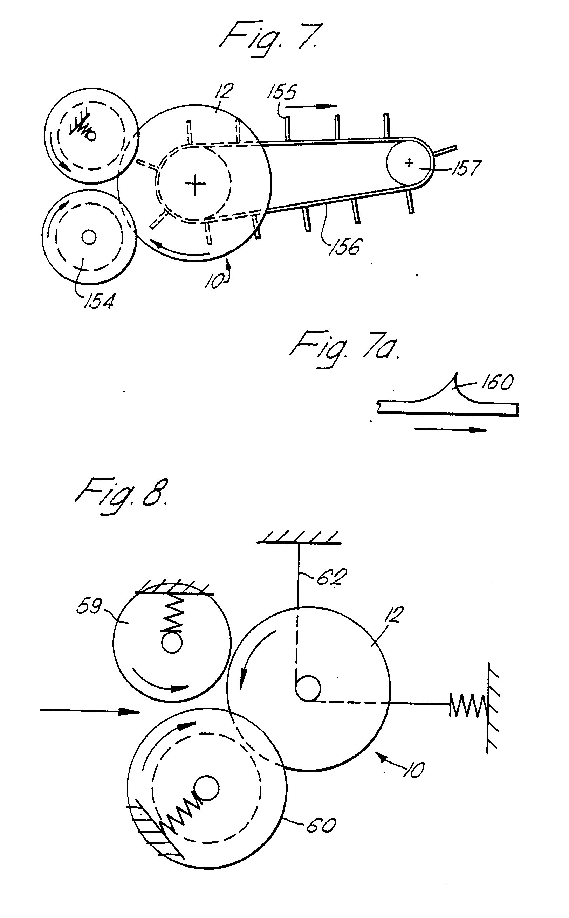

In the variations of Figures 7 and 7a, the loop 156 is positively driven from a powered guide roller 157 to move at a faster rate than the disc periphery. The loop and the discs rotate in the same (clockwise) sense as the fixed-position guide rotor 154. In this case, spikes 155 (Figure 7) fitted to the loop 156 result in dynamic extraction of the crop from the inter-disc spaces. The same result may be achieved by having the belt profiled with tooth-like protrusions 160, as shown in Figure 7a, in the place of the spikes 155.

In other variation, the rotational senses of the belts and crop-slicing discs shown in Figures 6 and 7 are reversed.

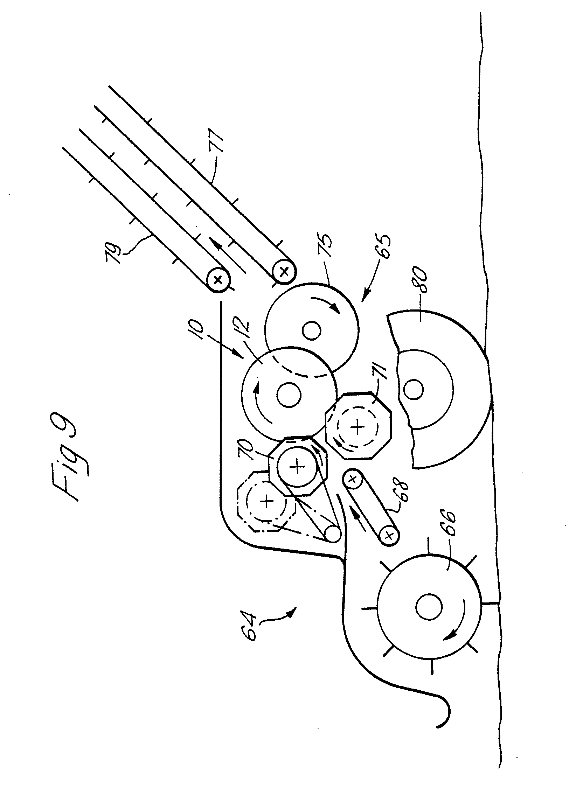

In the embodiment of Figure 8, the feed arrangement consists of one feed roller 59 and one recessed crop-supporting roller 60 as shown. The crop-extracting straps 62 are static. Both the feed roller 59 and the crop-supporting roller 60 are spring-biassed, the latter more strongly, so that they can retract when necessary to allow unyielding objects to pass through the apparatus without causing significant damage.

Referring now to Figure 9, this shows a cross-sectional diagrammatic view of a harvester 64 embodying a crop comminution apparatus 65 according to the present invention.

At the front end of the harvester, a pick-up 66 is provided to deliver the crop to a transfer conveyor 68.

The pick-up 66, which is shown diagrammatically in the drawings, is preferably one of the sort described earlier in the specification as being able to present the crop with the herbage stems and leaves lying at 45° or more to the direction of crop movement and preferably transversely to that direction. Alternatively, it may comprise a rotor carrying uni-directionally slanted or reverse-slanted plastic crop-engaging elements.

The transfer conveyor 68 in turn delivers the crop into the path of two recessed rollers 70, 71 which compact the crop to a certain extent and hold the crop in this compacted state while it is cut at intervals across the width of the rollers by interdigitating rotor discs 12 rotating in a clockwise sense as viewed in the Figure. As indicated in the drawing, the top roller 70 is retractable against a spring bias (not shown) to allow unyielding objects to pass through the apparatus without causing significant damage to the crop slicing rotor discs.

At the rear of the harvester, intermeshing sections of a recessed roller 75 extract the crop from the inter-disc spaces, the speed of the extraction roller 75 being fast enough to throw the crop onto the lower end of a lower ribbed crop-removal belt conveyor 77. Conveyor 77 moves at an identical linear speed with and upper belt conveyor 79 with which it co-operates to trap the comminuted crop and elevate it positively for delivery into a bulk trailer or other form of container (not shown).

Reference numeral 80 indicates the ground wheel of the harvester.

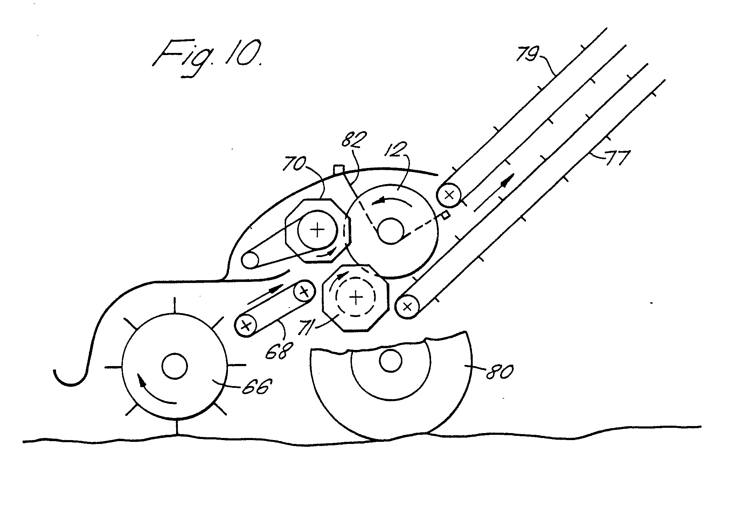

The harvester of Figure 10 differs from that of Figure 9 in having the rotor 10 rotate in an anticlockwise direction so that static extractor straps 82 can be used to remove the comminuted crop from between the rotor discs 12. After leaving the rotor, the crop falls by gravity onto the lower of two belt conveyors 77, 79 for upward elevation as previously described. In this case, roller 71 is retractable to help protect the apparatus against damage.

It is emphasised that Figures 9 and 10 are intended merely to be illustrative and neither is drawn accurately to scale.

Operationally, the embodiments of Figures 9 and 10 share the features of (1) double shear cutting, (2) having all the crop forced between the cutting discs from whence it is forcibly extracted and (3) having the crop fed into the cutting discs pre-compacted to some degree i.e. to provide force feeding and high throughputs.

If desired the embodiments of Figures 9 and 10 can be modified to have the other of the two crop-supporting rollers also retractable in response to varying crop loads so that although it at all times remains in mesh with the cutting discs, it allows the cutting path of the knives to be increased in proportion to the thickness of the crop layer.

In further variations of these two embodiments, the lower of the two crop-supporting rollers is re-dimensioned in respect of its diameter and the depth of the recesses so as to reach closely to the cutting rotor core. This enables the existing crop-extraction devices to be omitted and the roller 71 to serve the multi-purpose role of both knife guide and feed roller plus crop extraction means.

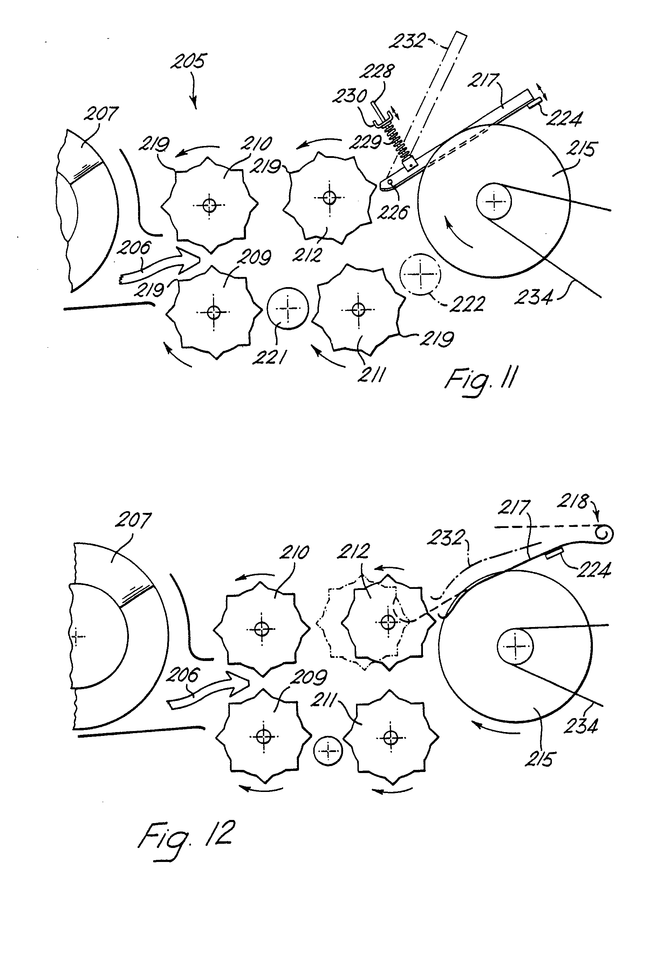

Referring now to Figure 11, this illustrates in cross-sectional side view a harvester 205 in which the stream of crop, denoted by a blunt-headed arrow 206, is being fed by a conventional auger 207 into a first pair of pre-feed rollers 209, 210 and then into the second pair of feed rollers 211, 212. The latter force the crop into the multi-disc cutting rotor 215 beneath a series of individually spring-loaded packer arms 217 pivoted upstream of rotor 215.

The presence of the pre-feed rollers 209, 210 upstream of the feed rollers 211, 212 allows favourable transverse alignment of the crop to be effected, i.e. with the stems of the crop aligned with the width dimension of the harvester. This is achieved by maintaining the peripheral speed of the pre-feed rollers 209, 210 at a greater value than that of the feed rollers 211, 212.

For example, if the speed of the crop leaving the auger trough is equal to some value V, say, then conveniently the peripheral speed of the pre-feed rollers 209, 210 will be 0.8V, that of the feed rollers 211, 212 0.6V and that of the cutting rotor 215 0.5V. Alternative ratios are possible for these same items for example $V:0.9V:0.8V:0.7V$ or $V:0.8V:0.6V:0.7V$.

This arrangement is particularly appropriate if the crop collecting mechanism of the harvester does not by itself achieve sufficient or any favourable crop alignment, or if a component like a conventional centre-delivering or side-delivering auger is present which can significantly reduce any favourable alignment the pick-up may have caused.

Conveniently, to assist this lateral aligning displacement of the crop, the feed rollers and pre-feed rollers may be fitted with helical conveying ribs 219 instead of straight transverse ribs. These helical ribs are preferably twisted in the same direction for the two rollers of each co-operating pair so as in operation to push material in opposite directions in the upper and lower halves of the crop stream.

With reference to the preceding description, it will be appreciated that the space between the four contoured rollers is particularly important in achieving favourable transverse crop alignment as above described, the material being forced into this space at a faster speed than it is allowed to leave. As a consequence, a lateral sliding and bending effect with some longitudinal crumpling of the crop is achieved. This effect continues in the space preceding the cutting rotor, provided suitable component speeds are selected.

The plain roller 221 shown between the lower contoured rollers 209, 211 may be driven or undriven and prevents crop being lost in the transition zone. As an alternative, a static curved or flat-topped blanking piece (not shown) may be used for this purpose instead.

The second plain roller 222 preceding the cutting rotor and shown in broken outline, is optional and serves the same purpose as the other plain roller. When present, roller 22 can create an adequate crop reservoir in front of the cutting rotor 215 to allow the pre-feed rollers 209, 210 to be omitted in certain machine configurations.

With suitably designed roller profiles such as those shown in Figure 11, for example, the transverse crop alignment effect produced by rotating the pre-feed rollers at a greater speed than the feed rollers can be enhanced by maintaining a speed differential between vertical as well as horizontal pairs of rollers. For example, if the speed of the crop on leaving the auger 207 is taken as V, then the peripheral speed of the lower pre-feed roller 209 may conveniently be 0.9V, that of the upper pre-feed roller 210 0.8V, that of the lower feed.roller 211 0.7V, that of the upper feed roller 212 0.6V and that of the knife rotor 215 0.5V. Alternative ratios are again possible however, including V:V:0.9V:0.8V:0.7V:0.6V for the same components or V:0.9V:0.8V:0.75V:0.7V:0.75V.

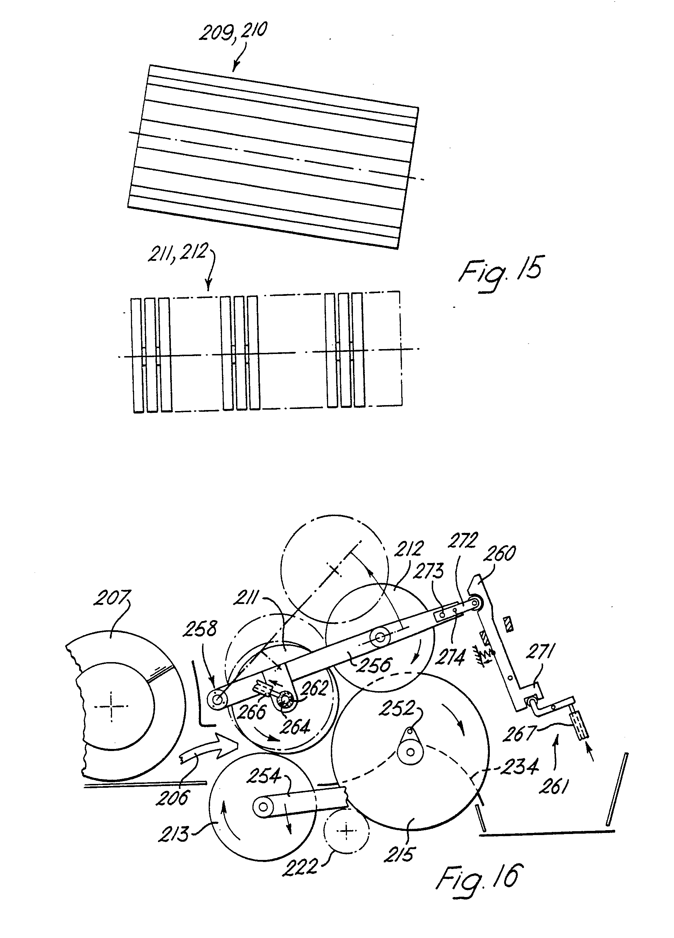

In the alternative roller configuration shown in Figure 16 where the rollers 211—213 are rearranged in a staggered line, a similar improvement can be achieved by driving each successive roller slower than the preceding roller.

Although, if desired, the feed rollers 211, 212 in Figure 11 can be circumferentially recessed and rearranged so as to intermesh with the cutting discs of rotor 215, the feed system of Figure 11 does not require this as directing and forcing the crop past the cutting edges of the crop-slicing rotor and into the inter-disc spaces can be accomplished by the packer arms 217.

To achieve the required resistance to bending, the packer arms are conveniently of inverted-T shape in cross-section, an adjustable stop 224 optionally near their downstream end determining the maximum intrusion into the inter-disc spaces.

Instead of the static stop 224, a driven eccentric shaft (not shown) can be provided in its place to activate the arms and so improve their crop conveying and space loading capability. In both instances, however, the pivot 226 for the packer arms is upstream of the slicing rotor and at a convenient point downstream of the pivot there is attached, preferably to the vertical strengthening fin of each arm, a pivoted guide rod 228 which passes through a compression-type coil spring 229 and then through an oversized hole or slot in a common channel section beam 230. The distance of the beam 230 from the packer arms 217 is adjustable, this, in turn, varying the spring resistance to the arms deflecting upwardly. Other means of spring-loading the packer arms singly, or in pairs, or in other multiples, are also possible.

In broken outline 232 is shown the position of a packer arm in response to an unyielding object spanning at least two cutting discs 215.

Reference numeral 234 indicates a static crop-extraction strap of the type already shown in Figure 1 for example.

The arrangement shown in Figure 11 has the advantages over earlier embodiments that (i) the feed rollers 209, 210 preceding the cutting rotor need not be circumferentially recessed, as they are in Figures 3, 4 and 6—10, (ii) each strip of crop across the width of the total crop stream is compacted and guided by the appropriate packer arm independently of adjacent strips, thus improving the uniformity of chopping, and (iii) a foreign object in the crop stream can pass over the cutting rotor 215 by having to overcome only the spring force acting upon the arm or arms 217 which cover its width, thus greatly reducing the potential for knife damage and minimising the quantity of crop which can pass unchopped.

The system of Figure 12, though fundamentally similar to the arrangement of Figure 11, differs from it in having the upper feed roller 212, which normally operates in close proximity of the slicing roller 215, able to move away from the cutting discs to allow a foreign object to pass. In addition the packer arms 217 are secured downstream of the slicing rotor by adjustable spring mountings 218 so that in response to a foreign object, or a serious crop overload situation, individual packer arms may rise out of engagement with the crop-slicing rotor.

Optionally, in the embodiment of Figure 12, the upper feed roller 212 may be recessed or consist of spaced discs, so that the packer arms 217 can intrude into the resulting spaces thereby permanently maintaining a bridge from the feed roller 212 to the crop-slicing rotor 215. With this latter arrangement, the direction of upper feed roll retraction can be upwards and upstream at an angle to the horizontal, say, of 30—60°. Again, the stop 224 for the packer arms is adjustable and as before it may be replaced by a driven eccentric shaft if desired.

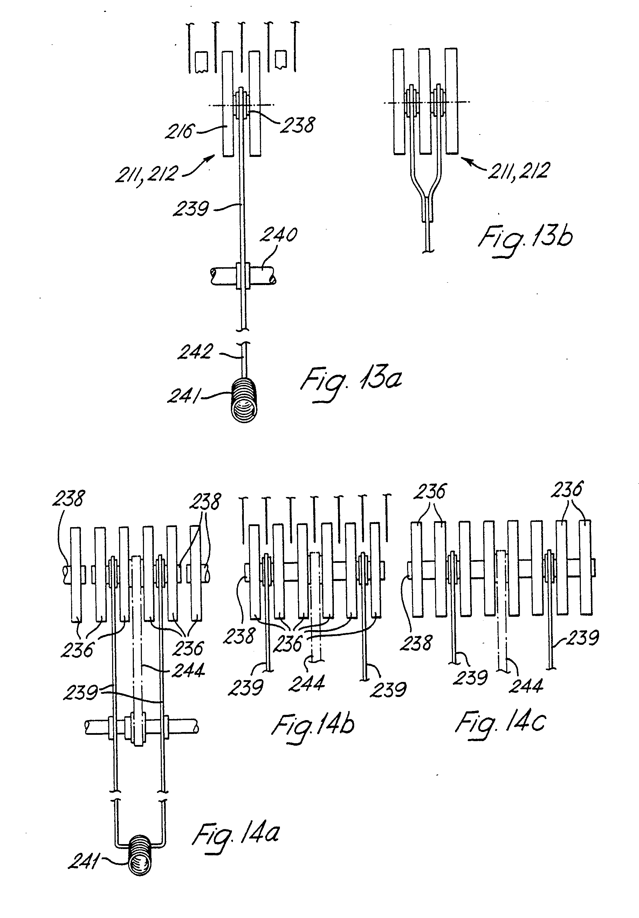

Figures 13a and 13b show an embodiment in which the feed rollers 211, 212 are recessed so as to be able to interdigitate with the cutting disc rotor 215. Rollers 211, 212 need not necessarily be driven and can be made in sections of two, three, four or more wide discs 236, or paired thin discs as shown in later Figure 14a.

As shown in Figure 13a, the common spindle 238 of the two wide discs 236 is connected by an arm 239 to a pivot shaft 240, and the pressure to keep the roller section in engagement with the cutting discs is created by a coil spring 241 which acts in tension or compression on the extension 242 of the pivot arm 239. Alternatively, the spring pressure can be applied between the pivot shaft 240 and the roller section 236, 238 or by a separate arm (not shown).

In Figure 13b, a 3-disc roller section is shown as a further example.

The theme of sectioned interdigitating rollers is taken further in the embodiments of Figure 14a, 14b and 14c where the roller sections are driven. Thus Figure 14a shows a 4-disc arrangement in which the pivot shaft 243 is driven and a chain or belt 244 connects it with the common shaft 238 of the 4-disc section which is supported by two pivot arms 239. By appropriate choice of pulley or sprocket sizes the desired roller drive speed can be achieved.

Alternative disc assemblies are shown by way of example in Figure 14b which illustrates a driven 6-disc section and in Figure 14c which illustrates an 8-disc section. If the width or torque loading of a roller section demands more than one drive connection to the rotating pivot shaft, these may be provided optionally.

Figure 15 shows in plan view a further refinement of a 4-roller crop feed arrangement capable of improving crop orientation prior to cutting. In this new embodiment, the axes of the pre-feed rollers 209, 210 lie at a slight angle to the axes of the optionally recessed feed rollers 211, 212 downstream. This creates variable density in the crop which is being packed into the inter-roller space and, in consequence, generates some lateral movement of crop, mainly by sliding, into the lower density region. One effect of this is an increase in the lateral alignment of crop, and the extent of this re-arrangement depends also on the extent to which the recessed rollers 211, 212 are driven more slowly than the preceding feed rollers 209, 210.

It is a common advantage of the embodiments of Figures 11 to 15 that (1) they ensure that a high percentage of the crop is favourably aligned relative the cutting planes of the slicing discs, regardless of the type of pick-up used; (2) they ensure that the density of the crop on being presented to the cutting discs is fairly uniform across the width of the crop stream, to assist uniform chopping, regardless of the lateral distribution of the crop; and (3) they achieve rapid and effective response to foreign objects which may be entrained in the crop stream, so that they can pass through the chopping system without causing serious damage, particularly to the cutting discs.

Figure 16 shows a safety mechanism in which the cutting disc rotor 215 is driven through a shearbolt 252 and remains with its rotation axis in a fixed position.

In this arrangement, the first roller 213 of three feed rollers 211, 212, 213 is mounted on arms 254 which can respond to increasing crop bulk by pivoting downwardly. The second and third feed rollers 211, 212 are mounted on a common arm or roller beam 256 which is pivoted at its upstream end 258 and is locked in position downstream by the pivoted arms 260 of an appropriate trip mechanism 261.

The intermediate feed roller 211 is mounted on the arm 256 in resilient bushes or rubber blocks 262 which allow a small amount of movement away from the normal position close to the cutting rotor periphery.

After passing between the two rollers 213, 211, the crop stream is forced against the cutting discs 215 by roller 211 so that it is pre-cut. The final intermeshing roller 212 completes the cutting process.

Should a solid object force its way between the intermediate roller 211 and the cutting rotor 215, so that the roller 211 is deflected excessively, the movement of the roller shaft 264 is transmitted e.g. hydraulically through coupling 266, 267, to the trip mechanism 261 where it pivots the arm 269 which holds the locating lever 271 for the roller beam 256 in position. When tripped in this way, the locating lever 271 can pivot downstream sufficiently to release the roller beam 256, allowing it to swing upwards sufficiently for the object to pass e.g. as indicated by the broken line positions for rollers 211 and 212. Instead of the hydraulic coupling 266, 267 a cable or electric impulse system may be used instead to pivot the arm 269 when an overload situation occurs.

When the overload situation no longer applies the beam 256 will be able to return under gravity against the resistance of the crop flow into the position shown in Figure 16.

As an additional safety measure, the head 272 of the beam 256 has a pivot 273 and a shearbolt 274 to allow its disengagement from the locking lever 260 in unforeseen or extreme circumstances. The arrangement is shown diagrammatically in the drawings for convenience. In practice however there will be one roller-mounting beam 256 on each side of the roller 211, 212, a connecting member at the downstream end, and the locking arrangement 261 will be positioned half-way across the connecting member.

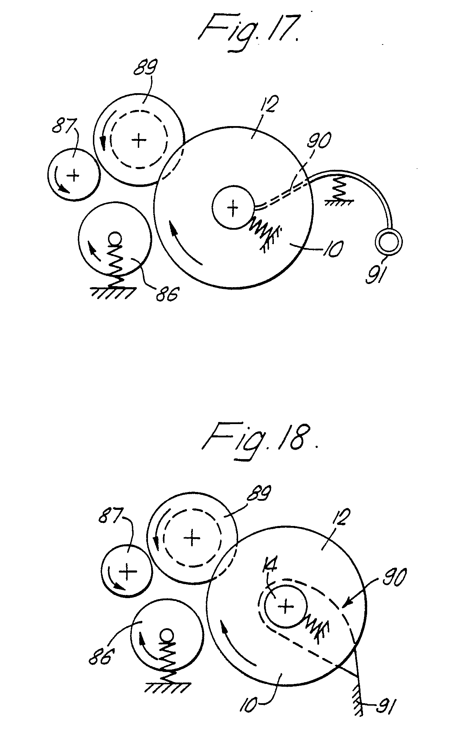

In the embodiment of Figure 17, the comminution apparatus comprises two feed rollers 86, 87, an upper recessed crop-support roller 89, providing the co-operating means, and a rotor 10 providing a counter-rotating multi-disc crop-slicing rotor at a lower level. Roller 86 and rotor 10 are retractably mounted as above described to protect the apparatus against damage from foreign objects picked up with the cut crop. In operation, a rigid comb-like extraction device 90 supported on an external framework 91 operates to remove the comminuted crop from between the rotor discs 12.

An alternative extraction device shown in Figure 18 consists of a series of rigid or near-rigid straps which have been found in practice to direct the entrapped crop smoothly from between the inter-disc spaces due to the gradual convergence with the cutting periphery. As will be clear from the Figure, each strap is in the form of a loop 90 embracing the rotor shaft 14 at one end and anchored to framework 91 at the other.

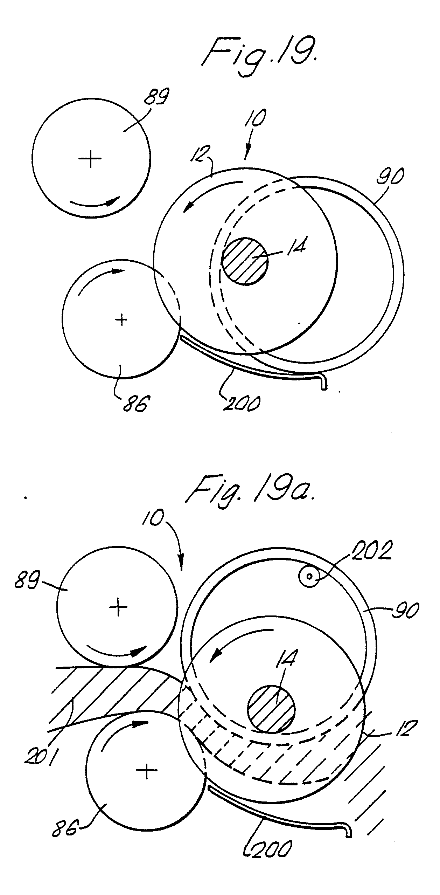

Another alternative is shown in Figures 19 and 19a where the extraction device 90 consists of loosely fitting, rigid or semi-rigid rings or hoops preferably made of firm plastics material and inserted one each into every inter-disc space on the cutting rotor 10. Reference numeral 200 indicates a crop delivery chute. Under no-load conditions, the hoops rest against the rotor shaft 14 and the delivery chute 200 as indicated in Figure 19. In operation, however, the lower recessed support roller 86 forces the crop stream 201 into the inter-disc spaces to move the hoops anticlockwise upwardly until they are restrained by the feed roller 89 or an external stop (not shown). The hoops remain in this stable position supported at the bottom by the crop stream 201. It is a particular advantage of this arrangement that the peripheries of the cutting discs and hoops again form a spiral convergence which has been found to give good crop extraction.

Reference numeral 202 in Figure 19a indicates an optional internal locating roller for the hoops which forms a stop to prevent contact with roller 89.

Contact of the hoops 90 with the moving crop stream 201 and the rotating shaft 14 causes the hoops to turn thereby advantageously reducing the frictional drag on the crop stream. This effect can be enhanced by providing high-friction surfaces on the inside of the hoops and around the rotor shaft 14.

In variations (not shown) of this embodiment, teeth are fitted to the mutually engaging surfaces of hoops 90 and shaft 14, to ensure a positive drive to the hoops. In one such case, this effect is enhanced by having the outer surfaces of the hoops carry protrusions for engaging with the crop.

It is also envisaged that the flat sides of the hoops 90 might advantageously be provided with an abrasive surface to give the cutting edges of the discs a sharpening effect during their occasional contact with the hoops or rings when these are not driven. For this purpose, the leading disc edges would clearly need to intrude marginally into the inter-disc spaces, as is the case with a saw-type set.

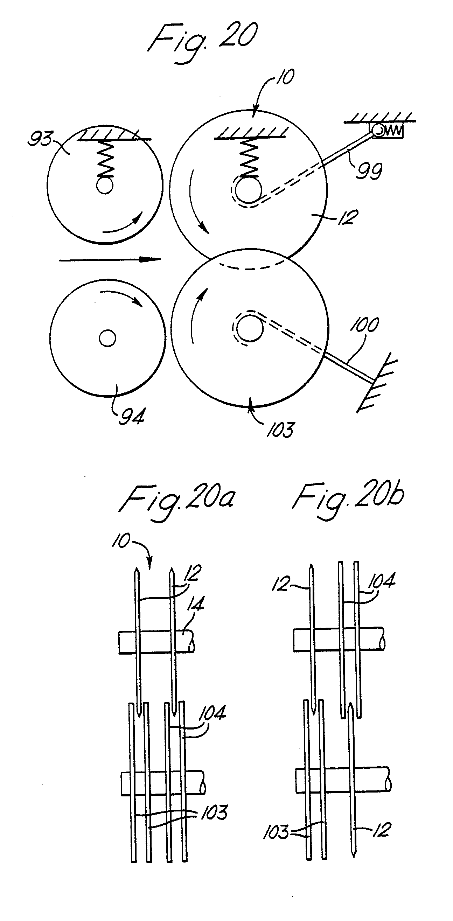

In the embodiment of Figures 20 and 20a, two feed rollers 93, 94 deliver the crop to a system in which disc-type co-operating means are arranged in pairs 103, 104 etc. with the discs of each pair preferably spaced just sufficiently apart to accommodate the crop-slicing discs 12 between them. In this arrangement, the paired co-operating discs 103, 104 serve as both crop-support and knife-guide mechanisms for the multi-disc rotor 10, the discs 12 of which are sharpened to give a central or alternating cutting edge so as to avoid serious side forces on the discs.

The unsharpened crop support discs 103, 104 provide a non-cutting inter-disc space-loading mechanism and their intrusion into each inter-disc space also gives rise to a double shear cutting mechanism.

Rigid and straight crop-extracting straps 99, 100 (shown only in Figure 20) are hooked over loose collars on the rotor shaft 14 to free crop from the inter-disc spaces.

As indicated in Figure 20, roller 93 and the crop-slicing rotor 10 are both spring biassed so as to be able to retract when necessary to allow unyielding objects to pass through the apparatus without damage to the discs 12.

In variations of this latter embodiment, shown in Figure 20a and 20b, the crop-slicing discs 12 and the disc pairs 103, 104 are shared alternately between the two shafts as illustrated so as to result in a more even distribution both of the crop-slicing forces and of the comminuted crop in the various inter-disc spaces. Although the crop-extractors are not shown in these two Figures; it is to be understood that they too will be shared between the two rotors.

Although in the drawings, the crop-slicing discs are shown equally spaced apart, in variations (not shown), the disc-to-disc spacing is less towards the sides than elsewhere.

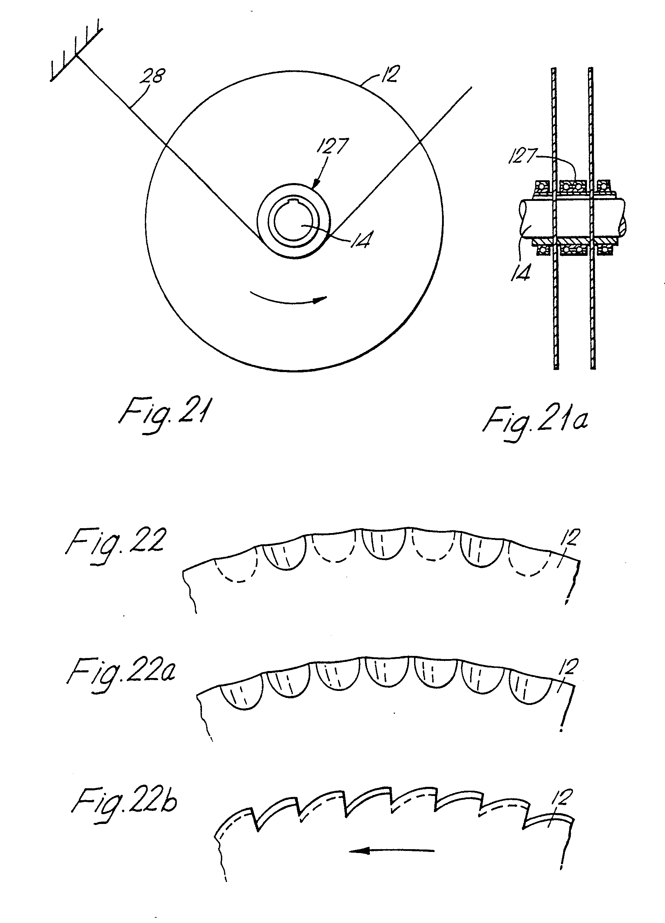

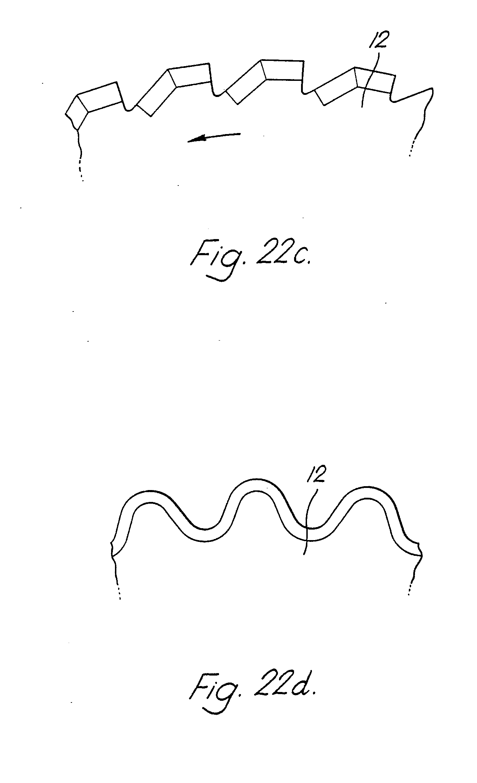

Turning now to Figures 21 and 21a, these show, in end and side view, diagrammatic details of the loose collars or centre bearings 127 which support the crop-extracting straps 28 there and prevent chafing. Because of the relatively low rotational speeds involved, proprietary bushes may also be suitable. A convenient form of extractor straps are light V-belts which may pass over loose collars or V-pulleys attached to the rotor shaft.

Figures 22, 22a and 22b show examples of substantially circular crop-slicing discs having alternative cutting edge profiles to plain, single or double bevel-edged discs. Plain cutting edges are appropriate, but not exclusively, when support roller and crop-slicing discs speeds are practically identical and at the higher levels of the cutting disc speeds cited, as might be appropriate with the embodiments of Figures 20 and 20a or Figures 20 and 20b, for example. However, the profiles of Figures 22, 22a and 22b have advantages when the speeds of the crop support rollers and cutting discs differ. The profiles shown in Figures 22 and 22a are produced by sharpening the edge of the disc alternately from opposite sides, and this results in the side forces on the discs being practically balanced out. Other suitable profiles are shown in Figure 22c (recessed double-bevel cutting edge) and in Figure 22d (wavy double-bevel cutting edge).

The cutting edge profiles shown in Figures 18, 18a and 18d have the particular advantage of being effective regardless of the direction of rotation of the cutting rotor.

Other cutting edge designs with more finely or coarsely shaped and sharpened irregularities will also find application.

In the various embodiments of the invention described above with reference to the drawings, any specific reference to the drives for the various moving parts of the apparatus has deliberately been omitted, in the interests of clarity. Clearly these drives may be of any convenient form, and although the invention includes a self-propelled machine within its scope, in a typical crop-slicing tractor-towed harvester in accordance with the present invention it is envisaged that power would most likely be transmitted from the tractor power take-off to a main gearbox by a drive shaft incorporating universal joints and optionally over-run and torque-limiting facilities. In this case, the crop pick-up, feed conveyor and feed rollers (or equivalent) would be driven by chains or belts from transverse shafts emanating from the gearbox, and a heavy-duty chain or belt system would be used to drive a lay shaft in the vicinity of the slicing and crop-extracting rollers (or equivalent). The crop elevator (when present) could be driven from its top or bottom rollers, say, by a hydraulic motor. Where the crop feed mechanism to the slicing rotor consists of a series of rollers, especially paired rollers, provision will be made in conformity with established practice for some of the rollers to retract in operation in response to uneven crop flow.

As will now be apparent, it is also intended in each case that the apparatus should be protected against damage by foreign objects and this can be done by having the crop-slicing rotor and/or the whole or sections of the co-operating means spring loaded and/or pivotally mounted in such a way that it or the appropriate section can retract momentarily sufficiently for the object concerned to pass. In modifications (not shown) of these arrangements, instead of, or as well as, having these parts retractable, the drive to the rotor and/or feed roller shaft may be provided with a shear bolt or clutch automatically operating to disconnect the drive if and when an unyielding object reaches the crop-slicing rotor of the apparatus. Preferably in this case, means are provided so that there is a feedback of information from the rotor shaft or feed means to the feed drive enabling the supply of crop to be stopped whenever the rotor is brought to a temporary standstill, and visible or audible signals inform the operator of the interruption.

In addition to protecting the cutting blades in this way, it is, as already stated above, also desirable to reject unwelcome objects at the input stage, i.e. before they have reached the feed means of the apparatus. This is possible particularly when a high speed pick-up is being used for the crop input. Thus in a preferred version of the harvesters of Figures 9 and 10, for example, an acoustic sensor and/or metal detection means (not shown) is arranged over the pick-up 66 so as to trigger a mechanical rejection system, when appropriate. One such system, the subject of GB—A—1602475 (NRDC), operates to acoustically sensing heavy objects and then deflecting them back to ground by means of an overhead flap.

As already indicated in the introductory sections of the present specification, where pairs of feed rollers or conveyor belts are to be used for the feed means in the various embodiments above described, then a degree of protection against unyielding objects in the crop stream will usually be present as a matter of course, if, as is usually the case, one in every pair of feed rollers or belt conveyors is spring-biased to enable it to respond to varying crop loads.

To reduce noise levels and wear rates, especially under no-load conditions, any recessed rollers present in the various embodiments described above may, if desired, be constructed from hardwood or polymer materials, or the recesses may be lined with wood, compound materials or plastics.

In operation of the various embodiments of the present invention, in particular, but not exclusively, those embodiments described above with reference to the accompanying drawings, the peripheral speed of the discs will usually lie within the range 0.2—25 m/s, preferably 0.4—15 m/s, and most preferably 0.6—5 m/s. The feeder speeds will not normally exceed 4 m/s, but may be more than 3 times that speed, and to increase or decrease the thickness of the advancing crop layer subsequently, the peripheral speed of the rotating crop support means downstream may be slower or faster respectively. The peripheral speeds of the rollers or discs providing the co-operating means will normally be in the range 0.5—10 m/s, and within this range a difference between the peripheral speeds of the crop-slicing discs and the co-operating means of not normally more than ±10% is desirable when recessed crop support rollers are being used, so as to keep the recesses substantially free of crop fragments. Whilst the values quoted above are intended as broad guides, both the speeds of the co-operating means and the feed means can, if desired, be varied within wider limits than those indicated above.

In the illustrated embodiments of the present invention, the diameters of the crop-slicing discs will preferably lie in the range 250—350 mm. Discs of larger or smaller diameter may be used instead, however, if desired. A convenient range is 150—500 mm and more especially 200—400 mm. In those embodiments where rollers are used to provide the co-operating means, these rollers may conveniently be from 150—300 mm in diameter.

As far as the crop-slicing discs are concerned, these may, for example, be made from steel, tungsten carbide, ceramic, or synthetic materials including fibre composites or a polymer matrix with metal, ceramic or tungsten carbide inclusions or laminates. To minimise crop/disc friction, the discs are conveniently coated with PTFE or any other suitable low-friction material. Disc thickness is conveniently about 1.5—5 mm, and the most practical range is 1—3 mm.

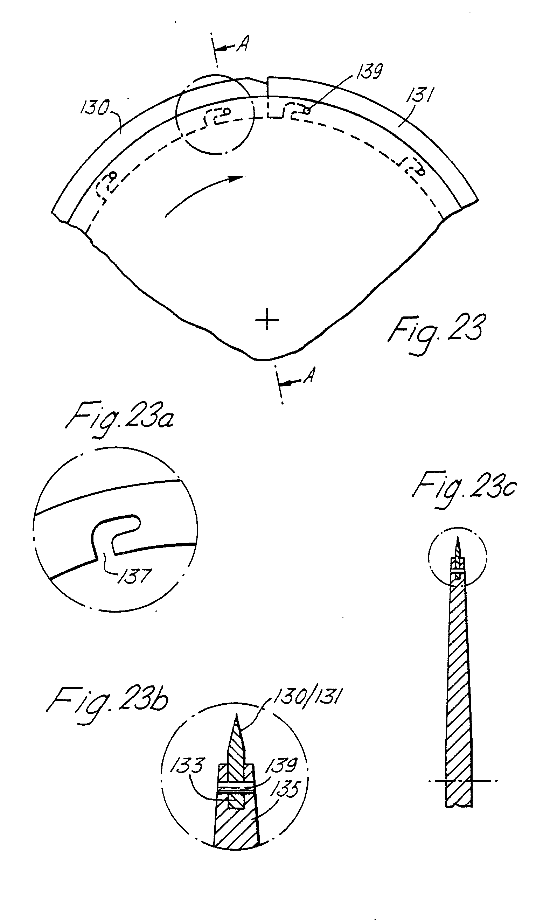

As already indicated, the crop-slicing discs may be so constructed that only the cutting edge requires replacement in one piece or in sections. One such arrangement is shown in Figures 23 to 23c in which the cutting rim of the illustrated disc is provided by two or more sections 130, 131. These latter fit into a peripheral recess 133 in a hub part 135 of the disc where they are locked into position by circumferentially sliding them until shaped slots 137 in the cutting strip sections engage with transverse pins 139 in the hub part. Preferably the locking system is so designed that, in use, the edge sections 130, 131 will tend to tighten on to the transverse locating pins 139. It is to be understood that the renewable cutting edge sections may be much deeper than shown in Figure 23 and that other methods of securing them may be employed.

The spacing of the crop-slicing rotor discs and the interacting parts of the co-operating means is one of two important factors determining the resultant median crop particle length of the comminuted crop. The other factor is the orientation of the crop. With favourably presented crop, for example, the actual mean particle length may be equivalent to 1.2—1.4 times the nominal disc-to-disc spacing, and with more randomly presented crop it is commonly in the region of greater than 1.6 times the nominal disc-to-disc spacing. The lower end of the range of practicable disc spacings lies around 10 mm.

As picked up from the swath, the density of freshly cut and wilted grass varies broadly in the region of 150 to 350 kg per cubic metre but in all the embodiments above described the feed arrangements to the crop-slicing discs are likely to increase crop density by a factor up to around 1.5. Operative at the lower end of this range are the single conveyor arrangement of Figure 4 and the tine and fork mechanisms of Figures 1 and 2. These are followed by the twin belt conveyors of Figure 3 and the pairs of compacting rollers in Figures 5 to 20b. The maximum increase in crop density will occur if a baler-type piston (not shown) is used. Forage harvester throughputs, i.e. the feed rates to the chopping mechanisms, will usually range from about 10 to 70 tonnes of crop per hour.

Compared with previously known arrangements using rotating discs to slice cut crop, at least preferred embodiments of the present invention have achieved several performance improvements by the introduction of static, free-moving or driven extractors of crop from the inter-disc spaces, and by the use of recessed crop support rollers which direct the crop between the cutting discs, and, when driven at only slightly differing speeds to the cutting discs, maximise shear, minimise power requirement and knife wear and keep the recesses free of crop accumulation. The slow-speed operation of the cutting discs achieved with the apparatus of the present invention was possible previously only at lateral disc spacings too wide to give relatively fine chopping. Conversely, fine chopping was possible only at disc speeds so high that heating would be inevitable, crop could not enter the inter-disc spaces, energy was used unnecessarily in accelerating the crop mass, and safety devices could not prevent substantial damage.

Another advantage of some embodiments of the present invention, especially those embodiments using the simpler of the crop extraction systems e.g. static extractors or the hoop arrangement of Figures 19 and 19a, is the slow speed of crop delivery from the comminution apparatus. This makes it easy to convey the crop mechanically away from the comminution apparatus and results in a considerable saving of energy and reduced field losses through small particles drifting off or penetrating pervious trailer extensions. It also facilitates the filling of smaller containers than was possible hitherto, whether palletised or not, and, for this reason, the comminution apparatus of the present invention may be well suited for use with high value crops such as parsley and other herbs which are usually handled in relatively small volumes.

Although in all the embodiments discussed above, the crop-slicing conveying rotor has in each case been provided by an array of cutter discs, it will be appreciated that the interspace loading means has varied between different designs of plates (Figures 1, 2 and 5), rollers (Figures 3, 4, 6 to 10, 16 and 17 to 19a), arms (Figures 11 to 15) and discs (Figures 20 to 22). Similarly, the interspace crop extractors have varied between different designs of straps (Figures 1 to 4, 8, 10, 11 to 16, 22 and 22a), disc rotors (Figures 5 and 9), belts (Figures 6 and 7), combs (Figure 17), loops (Figure 18), hoops (Figures 19 and 19a), and bars (Figure 20). The crop pick-up at the front end of the machine has also taken a number of different forms e.g. it can take the form of a tine bar etc., a brush, or a pick-up as disclosed in co-pending UK Patent Application No. 8209019. The feed arrangement between the pick-up and the crop-slicing rotor may also be provided in a number of different ways e.g. by different designs of belts, rollers and a piston.

It will be apparent from the above discussion that a wide selection of integers is possible at the pick-up, feed, inter-space loader and inter-space extractor stages of the machine and it should be understood that where circumstances allow, any such item from one embodiment may be replaced by the equivalent item from another embodiment. For example, the space-loading plate of the Figure 1 embodiment may be replaced by the different plates of the Figure 2 or Figure 5 embodiments or by the different rollers, arms or discs of the remaining embodiments. One particularly advantageous variation of the illustrated embodiments is thought to be, for example, the arrangement of Figure 10 modified by the inclusion of the hoop type extractors of Figure 19 and 19a in place of the crop extraction straps shown in Figure 10.

Other modifications are also possible of course without departing from the spirit of the invention. For example, where disc rotors are used for the co-operating means (e.g. as in Figures 14a and 14b) or for the extractor (e.g. as in Figure 9), then conveniently these discs are of non-circular shape. They might, for example, be serrated or recessed or of polygonal (e.g. 8-sided or 10-sided) shape.

It should also be borne in mind that the feed roller and cutting rotor shafts may be vertical instead of horizontal in which case the embodiments of Figures 1 to 23c etc. still serve as an adequate disclosure of these vertical axis embodiments provided that what are described as side views are interpreted as plan views and vice versa. Reference to upper and lower rollers etc. should similarly be taken to include rollers to one or other side of the centre line or feed passage of the apparatus, and the accompanying claims should be interpreted to include all these possibilities.

One advantage of these vertical axis arrangements would be that continuous extractor circuits would operate with fewer practical problems than in the horizontal axis embodiments, since any crop which passed between adjacent belt or chain runs would fall out harmlessly by gravity, and any scrapers to prevent crop adhesion would be more effective.

As suggested earlier in the application, in each of the embodiments described above, the inter disc spacing at the crop-slicing rotor 10, 215 is preferably 50 mm or less, values of around and below 25 mm preferred. As already indicated, even with the crop slicing discs so close together, the apparatus of the present invention is still able to operate with peripheral crop-slicing speeds of under 25 metres per second. Indeed, in one tested embodiment, quoted by way of example only, peripheral speeds of as low as 1 to 2 metres per second were found satisfactory.

**Claims**

1. An apparatus for comminuting cut crop comprising a multiple disc slicing rotor (10) and crop extraction means (28; 51; 56; 62; 75; 82; 90; 99; 100; 156; 234) intruding into or passing through the inter-disc spaces for removing comminuted crop from the rotor characterised in that the apparatus comprises co-operating means (25; 26; 42; 49; 53; 54; 60; 70, 71; 154; 211, 212; 217) presenting only non-cutting surfaces to the crop and intermeshing with the discs (12) of the slicing rotor (10) to support the crop during slicing and direct the comminuted crop into the inter-disc spaces.

2. An apparatus as claimed in Claim 1 characterised in that it has an inter-disc spacing of 50 mm or less and including rotor drive means adapted to drive the rotor discs (12) with a peripheral speed somewhere in the range of 0.2 to 25 meters per second.

3. An apparatus as claimed in any preceding claim characterised in that the slicing rotor (10) and/or the co-operating means (42; 54; 60; 70; 211, 212) are temporarily retractable so as to allow an unyielding object picked up with the cut crop to pass through the apparatus without significant damage to the apparatus.

4. An apparatus as claimed in any preceding claim characterised in that the co-operating means takes the form of an appropriately slotted support to ledger plate assembly (25; 49).

5. An apparatus as claimed in Claims 1 to 3 characterised in that the co-operating means takes the form of a roller or disc assembly (42; 211, 212) arranged to interdigitate with the discs (12) of the crop-slicing rotor.

6. An apparatus as claimed in Claim 5 characterised in that it includes drive means for driving the interdigitating roller or disc assemblies (42; 211, 212).

7. An apparatus as claimed in Claim 5 or Claim 6 characterised in that roller sections or discs (42; 54; 60; 70; 211, 212) of the co-operating means are individually mounted so as to be temporarily and separately retractable should an unyielding object reach them in the crop feed of the apparatus.

8. An apparatus as claimed in Claim 6 or Claim 7 characterised in that the drive means is operable to provide at least a difference, in either sense, between the peripheral speeds of the rotor discs (12) and the co-operating means (42; 54; 60; 70; 211, 212).

9. An apparatus as claimed in Claims 1 to 3 characterised in that the co-operating means comprises a plurality of packer arms (26; 217) adapted to interdigitate with the discs (12) of the slicing rotor (10).

10. An apparatus as claimed in Claim 9 characterised in that the packer arms (26; 217) are biassed individually, or in groups, towards the crop slicing rotor (10) so as to be temporarily retractable separately, or in groups, should an unyielding object reach them in the crop feed of the apparatus.

11. An apparatus as claimed in any preceding claim characterised in that the cut crop is fed to the crop-slicing rotor by feed rollers and pre-feed rollers (209, 210, 211, 212), the apparatus including drive means adapted to rotate the feed rollers (211, 212) with a lower peripheral speed than the pre-feed rollers (209, 210) thereby to provide favourable transverse alignment to the crop on arrival at the crop-slicing rotor (10).

12. An apparatus as claimed in Claim 11 characterised in that the feed rollers and the pre-feed rollers (209, 210, 211, 212) are arranged in vertical pairs and the drive means is adapted to rotate the uppermost or lowermost rollers (210, 212) of each pair with a slower peripheral speed than the other roller (209, 211) of that pair.

13. An apparatus as claimed in any of Claims 1 to 10 characterised in that the cut crop is fed to the crop-slicing rotor (10) by rollers (211, 212, 213) which are staggered one after the other, the apparatus including drive means adapted to rotate each roller at a slower peripheral speed than the preceding roller.

14. An apparatus as claimed in any preceding claim characterised in that the crop-extracting means is provided by a recessed roller or discs assembly (51; 75) interdigitating with the crop-slicing discs (12).

15. An apparatus as claimed in Claims 1 to 13 characterised in that the crop-extracting means is provided by rigid or semi-rigid rings, hoops, bars or comb-like extractor means (82; 90; 99; 100; 234) positioned or passing between adjacent crop-slicing discs.

16. An apparatus as claimed in any of Claims 1 to 13 characterised in that the crop-extracting means is provided by flexible strap members, belts or loops (28; 56; 62; 156) positioned or passing between adjacent crop-slicing discs.

17. An apparatus as claimed in Claim 16 characterised in that the crop-extracting means (156) are driven to move at a faster speed than the peripheral speed of the crop-slicing discs (12) and include protrusions (156) which positively move the comminuted crop particles.

18. An apparatus as claimed in any preceding claim when including the limitations of Claim 5 and characterised in that the co-operating means takes the form of two roller or disc assemblies (53, 54; 70, 71; 154) arranged to interdigitate with the discs (12) of the crop-slicing rotor (10), one of said assemblies (54; 70) being temporarily retractable to allow an unyielding object arriving in the crop feed to pass through the apparatus without causing substantial damage, and the other one of said assemblies (53; 71; 154) being arranged to remain in mesh with the crop-slicing discs (12) to stabilise said discs (12) when the retractable assembly (53; 71; 154) has temporarily retracted.

19. An apparatus as claimed in any preceding claim characterised in that the co-operating means (25; 26; 42; 49; 53, 54; 60; 70, 71; 154; 211, 212; 217) supports the crop on either side of each crop-slicing disc thereby to provide double shear cutting of the crop.

20. An apparatus as claimed in any preceding claim characterised in that it includes feed means adapted to provide the crop-slicing rotor with crop in a relatively highly compacted state.

## Patentansprüche

1. Vorrichtung zum Zerkleinern geschnittener Feldfrüchte mit einem Mehrscheibenschneidrotor (10) und Einrichtungen zum Herausziehen der Feldfrüchte (28; 51; 56; 62; 75; 82; 90; 99; 100; 156; 234), die in die Scheibenzwischenräume eingezwängt sind oder durch diese durchgehen, um vom Rotor zerkleinerte Feldfrüchte zu entfernen, dadurch gekennzeichnet, daß die Vorrichtung zusammenwirkender Einrichtungen (25; 26; 42; 49; 53; 54; 60; 70; 71; 154; 211, 212; 217) umfaßt, die nur nicht-schneidende Flächen den Feldfrüchten darbieten und in Wechselwirkung mit den Scheiben (12) des (Scheiben)schneidrotors (10) treten, um die Feldfrüchte während des Schneidvorgangs abzustützen und die zerkleinerten Feldfrüchte in die Scheibenzwischenräume zu führen.

2. Vorrichtung nach Anspruch 1, gekennzeichnet durch einen Zwischenscheibenabstand von 50 mm oder weniger und durch Rotorantriebseinrichtungen, die so ausgebildet sind, daß sie die Rotorscheiben (12) mit einer Umfangsgeschwindigkeit in etwa im Bereich von 0,2 bis 25 m/s antreiben.

3. Vorrichtung nach einem der vorhergehenden Ansprüche, dadurch gekennzeichnet, daß der Schneidrotor (10) und/oder die zusammenwirkenden Einrichtungen (42; 54; 60; 70; 211, 212) zeitweise zurückziehbar sind, so daß ein mit den geschnittenen Feldfrüchten aufgenommener unnachgiebiger Gegenstand durch die Vorrichtung ohne merkliche Beschädigung an der Vorrichtung gehen kann.

4. Vorrichtung nach einem der vorhergehenden Ansprüche, dadurch gekennzeichnet, daß die zusammenwirkenden Einrichtungen die Form eines geeignet geschlitzten Trägers für die Gegenplatten oder Untermesseranordnung (25; 49) hat.

5. Vorrichtung nach einem der Ansprüche 1 bis 3, dadurch gekennzeichnet, daß die zusammenwirkenden Einrichtungen die Form einer Rollen- oder Scheibenanordnung (42; 211, 212) haben, die so angeordnet ist, daß sie fingerartig mit den Scheiben (12) des feldfruchtschneidenden Rotors in Eingriff kommt.

6. Vorrichtung nach Anspruch 5, gekennzeichnet durch Antriebseinrichtungen, zum Antreiben der fingerartig eingreifenden Rollen- oder Scheibenanordnungen (42; 211, 212).

7. Vorrichtung nach Anspruch 5 oder 6, dadurch gekennzeichnet, daß Rollenabschnitte oder Gruppen oder Scheiben (42; 54; 60; 70; 211, 212) der zusammenwirkenden Einrichtungen einzeln gelagert sind, so daß sie zeitweise und getrennt zurückziehbar sind, sollte ein nicht nachgebender Gegenstand sie beim Feldfruchtvorschub der Vorrichtung erreichen.

8. Vorrichtung nach Anspruch 6 oder 7, dadurch gekennzeichnet, daß die Antriebseinrichtung wirksam wird, um wenigstens einen Unterschied in beiden Richtungen zwischen den Umfangsgeschwindigkeiten der Rotorscheiben (12) und den zusammenwirkenden Einrichtungen (42; 54; 60; 70; 211, 212) zu liefern.

9. Vorrichtung nach einem der Ansprüche 1 bis 3, dadurch gekennzeichnet, daß die zusammenwirkenden Einrichtungen eine Vielzahl von Packarmen (26; 217) umfassen, die so ausgebildet sind, daß sie fingerartig in Eingriff mit den Scheiben (12) des Schneidrotors (10) kommen.

10. Vorrichtung nach Anspruch 9, dadurch gekennzeichnet, daß die Packarme (26; 217) einzeln oder in Gruppen gegen den Feldfruchtschneidrotor (10) vorgespannt sind, so daß sie zeitweise getrennt oder in Gruppen zurückziehbar sind, sollte ein nicht nachgiebiger Gegenstand sie beim Feldfrüchtevorschub der Vorrichtung erreichen.

11. Vorrichtung nach einem der vorhergehenden Ansprüche, dadurch gekennzeichnet, daß die geschnittenen Feldfrüchte dem Feldfruchtschneiderotor durch Zuführrollen und Vorzuführrollen (209, 210, 211, 212) zugeführt werden, wobei die Vorrichtung Antriebseinrichtungen aufweist, die so ausgebildet sind, daß sie die Zuführrollen (211, 212) mit einer niedrigeren Umfangsgeschwindigkeit als die Vorzuführrollen (209, 210) antreiben, wodurch eine günstige Querausrichtung zu den Feldfrüchten bei Ankunft am feldfruchtschneidenden Rotor (10) geboten ist.

12. Vorrichtung nach Anspruch 11, dadurch gekennzeichnet, daß die Zuführrollen und die Vorzuführrollen (209, 210, 211, 212) in vertikalen Paaren angeordnet sind und daß die Antriebseinrichtung so ausgebildet ist, daß sie die obersten und untersten Rollen (210, 212) jedes Paares mit einer niedrigeren Umfangsgeschwindigkeit als die andere Rolle (209, 211) des Paares in Drehung versetzen.

13. Vorrichtung nach einem der Ansprüche 1 bis 10, dadurch gekennzeichnet, daß die geschnittenen Feldfrüchte dem Feldfrucht(scheiben)schneiderotor (10) durch Rollen (211, 212, 213) zugeführt werden, die hintereinander versetzt angeordnet sind, wobei die Vorrichtung Antriebseinrichtungen umfaßt, die jede Rolle bei niedrigerer Umfangsgeschwindigkeit als die vorhergehende Rolle in Drehung versetzen.

14. Vorrichtung nach einem der vorhergehenden Ansprüche, dadurch gekennzeichnet, daß die die Feldfrüchte herausziehende Einrichtung durch eine Nutenrolle oder eine Scheibenanordnung (51; 75) gebildet ist, die fingerartig in Eingriff mit den feldfruchtschneidenden Scheiben (12) kommt.

15. Vorrichtung nach einem der Ansprüche 1 bis 13, dadurch gekennzeichnet, daß die die Feldfrüchte herausziehenden bzw. extrahierenden Einrichtungen durch steife oder halbsteife Ringe, Bügel, Ringe, Scheiben oder kammähnlichen Extraktoreinrichtungen (82; 90; 99; 100; 234) gebildet sind, die zwischen benachbarten feldfruchtschneidenden Scheiben angeordnet sind oder zwischen diesen durchgehen.

16. Vorrichtung nach einem der Ansprüche 1 bis 13, dadurch gekennzeichnet, daß die die Feldfrucht extrahierende Einrichtung gebildet wird durch flexible Bandelemente, Riemen oder Schleifen (28; 56; 62; 156), die zwischen benachbarten feldfruchtschneidenden Scheiben angeordnet sind oder zwischen diesen durchgehen.

17. Vorrichtung nach Anspruch 16, dadurch gekennzeichnet, daß die die Feldfrüchte extrahierenden Einrichtungen (156) so angetrieben sind, daß sie bei größerer Geschwindigkeit als der Umfangsgeschwindigkeit der feldfruchtschneidenden Scheiben (12) sich bewegen und Vorsprünge (156) aufweisen, die zwangsweise die zerkleinerten Feldfruchtpartikel bewegen.

18. Vorrichtung nach einem der vorhergehenden Ansprüche einschließlich der Präzisierungen des Anspruchs 5, dadurch gekennzeichnet, daß die zusammenwirkenden Einrichtungen die Form von zwei Rollen- oder Scheibenanordnungen (53, 54; 70, 71; 154) aufweisen, die so angeordnet sind, daß sie fingerartig in Eingriff mit den Scheiben (12) des feldfruchtschneidenden Rotors (10) kommen, wobei eine dieser Anordnungen (54; 70) zeitweise zurückziehbar ist, um es einem nicht nachgebenden Gegenstand, der in die Feldfruchtförderung gelangt, zu ermögliche, ohne wesentlichen Schaden anzurichten, durch die Vorrichtung zu passieren und daß die andere dieser Anordnungen (53; 71; 154) so angeordnet ist, daß sie kämmend mit den hackfruchtschneidenden Scheiben (12) verbleibt, um die Scheiben (12) zu stabilisieren, wenn die zurückziehbare Anordnung (53; 71; 154) zeitweise zurückgezogen ist.

19. Vorrichtung nach einem der vorhergehenden Ansprüche, dadurch gekennzeichnet, daß die zusammenwirkenden Einrichtungen (25; 26; 42; 49; 53; 54; 60; 70, 71; 154; 211, 212; 217) die Feldfrüchte auf beiden Seiten jeder feldfruchtschneidenden Scheibe abstützen, wodurch ein doppelter Scherschnitt der Feldfrüchte herbeigeführt wird.

20. Vorrichtung nach einem der vorhergehenden Ansprüche, gekennzeichnet durch Zuführ- oder Vorschubeinrichtungen, die so ausgebildet sind, daß sie den feldfruchtschneidenden Rotor mit Feldfrucht in einem relativ hochverdichteten Zustand beaufschlagen.

**Revendications**

1. Un appareil pour une récolte hachée coupée, comportant un rotor de tranchage multidisques (10) et des moyens d'extraction de récolte (28; 51; 56; 62; 75; 82; 90; 99; 100; 156; 234) s'engageant dans ou passant à travers les espaces inter-disques pour retirer du rotor la récolte hachée, caractérisé en ce que l'appareil comporte des moyens de coopération (25; 26; 42; 49; 53; 54; 60; 70, 71; 154; 211, 212; 217) ne présentant à la récolte que des surfaces noncoupantes et agissant conjointement avec les disques (12) du rotor de tranchage (10) pour soutenir la récolte pendant la coupe et diriger la récolte hachée dans les espaces inter-disques.

2. Un appareil selon la revendication 1, caractérisé en ce qu'il présente un espacement inter-disques de 50 mm ou inférieur et comporte un moyen de commande du rotor adapté pour entraîner les disques (12) du rotor à une vitesse périphérique comprise dans la gamme allant de 0,2 à 25 mètres par seconde.

3. Un appareil selon l'une quelconque des revendications précédentes, caractérisé en ce que le rotor de tranchage (10) et/ou les moyens de coopération (42; 54; 60; 70; 211, 212) peuvent s'effacer temporairement de manière à permettre à un objet résistant ramassé avec la récolte coupée de traverser l'appareil sans causer de dommages notables à cet appareil.

4. Un appareil selon l'une quelconque des revendications précédentes, caractérisé en ce que les moyens de coopération prennent la forme d'un support fendu de façon appropriée de l'ensemble à contre-plaque (25; 49).

5. Un appareil selon l'une quelconque des revendications 1 à 3, caractérisé en ce que les moyens de coopération prennent la forme d'un ensemble à rouleaux ou à disques (42; 211, 212) disposé pour engrener entre les disques (12) du rotor de tranchage de récolte.

6. Un appareil selon la revendication 5, caractérisé en ce qu'il comporte des moyens de commande pour entraîner les ensembles à rouleaux ou à disques en engrènement (42; 211, 212).

7. Un appareil selon la revendication 5 ou la revendication 6, caractérisé en ce que des parties de rouleaux ou des disques (42; 54; 60; 70; 211, 212) des moyens de coopération sont montés individuellement de manière à pouvoir s'effacer temporairement et séparément si un objet résistant de la récolte amenée dans l'appareil les atteignait.

8. Un appareil selon la revendication 6 ou la revendication 7, caractérisé en ce que les moyens de commande peuvent être actionnés pour créer au moins une différence, dans un sens ou dans l'autre, entre les vitesses périphériques des disques (12) du rotor et les moyens de coopération (42; 54; 60; 70; 211, 212).

9. Un appareil selon les revendications 1 à 3, caractérisé en ce que les moyens en coopération comportent une pluralité de bras de compactage (26; 217) adaptés pour engrener entre les disques (12) du rotor de tranchage (10).

10. Un appareil selon la revendication 9, caractérisé en ce que les bras de compactage (26; 217) sont sollicités individuellement, ou en groupes, vers le rotor de tranchage de récolte (10) de manière à pouvoir s'effacer temporairement, ou en groupes, si un objet résistant de la récolte amenée dans l'appareil les atteignait.

11. Un appareil selon l'une quelconque des revendications précédentes, caractérisé en ce que la récolte coupée est amenée au rotor de tranchage de récolte par des rouleaux d'alimentation et des rouleaux de pré-alimentation (209, 210, 211, 212), l'appareil comportant des moyens de commande adaptés pour faire tourner les rouleaux d'alimentation (211, 212) à une plus faible vitesse périphérique que les rouleaux de pré-alimentation (209, 210) et réaliser ainsi un alignement transversal favorable pour la récolte lorsqu'elle arrive au rotor de tranchage de récolte (10).

12. Un appareil selon la revendication 11, caractérisé en ce que les rouleaux d'alimentation et les rouleaux du pré-alimentation (209, 210, 211, 212) sont disposés par paires verticales et les moyens de commande sont adaptés pour faire tourner les rouleaux supérieur ou inférieur (210, 212) de chaque paire à une vitesse périphérique plus faible que l'autre rouleau (209, 211) de cette paire.

13. Un appareil selon l'une quelconque des revendications 1 à 10, caractérisé en ce que la récolte est amenée au rotor du tranchage de récolte (10) par des rouleaux (211, 212, 213) qui sont échelonnés l'un après l'autre, l'appareil comportant des moyens de commande pour faire tourner chaque rouleau à une vitesse périphérique plus faible que celle de rouleau précédent.

14. Un appareil selon l'une quelconque des revendications précédentes, caractérisé en ce que les moyens d'extraction de récolte sont constitués par un rouleau évidé ou un ensemble à disques (51; 75) engrenant entre les disques de tranchage de récolte (12).

15. Un appareil selon l'une quelconque des revendications 1 à 13, caractérisé en ce que les moyens d'extraction de récolte sont constitués par des anneaux rigides ou semi-rigides, des cercles, des barres ou des moyens d'extraction semblables à des peignes (82; 90; 99; 100; 234) positionnés ou passant entre des disques de tranchage de récolte voisins.

16. Un appareil selon l'une quelconque des revendications 1 à 13, caractérisé en ce que les moyens d'extraction de récolte sont constitués par des éléments de bandes souple des courroies ou des boucles (28; 56; 62; 156) positionnés ou passant entre des disques de tranchage de récolte voisins.

17. Un appareil selon la revendication 16, caractérisé en ce que les moyens d'extraction de récolte (156) sont commandés pour se déplacer à une vitesse plus élevée que la vitesse périphérique des disques de tranchage de récolte (12) et présentent des saillies (156) qui déplacent effectivement les particules de la récolte hachée.

18. Un appareil selon l'une quelconque des revendications précédentes, comprenant les limitations de la revendication 5 et caractérisé en ce que les moyens en coopération prennent la forme de deux ensembles à rouleaux ou à disques (53, 54; 70, 71; 154) disposés pour engrener entre les disques (12) du rotor de tranchage de récolte (10), l'un desdits ensembles (54; 70) pouvant s'effacer temporairement pour permettre à un objet résistant qui arrive dans la récolte amenée de passer à travers l'appareil sans causer de dommages notables, et l'autre desdits ensembles (53; 71; 154) étant disposé pour rester en engrènement avec les disques de tranchage de récolte (12) et stabiliser lesdits disques quand l'ensemble effaçable (53; 71; 154) est temporairement effacé.

19. Un appareil selon l'une quelconque des revendications précédentes, caractérisé en ce que les moyens en coopération (25; 26; 42; 49; 53; 54; 60; 70, 71; 154; 211, 212; 217) soutiennent la récolte de chaque côté de chaque disque de tranchage de récolte en provoquant ainsi un tranchage de la récolte à double cisaillement.

20. Un appareil selon l'une quelconque des revendications précédentes, caractérisé en ce qu'il comporte des moyens d'alimentation adaptés pour amener au rotor de tranchage de récolte, une récolte dans un état de compactage relativement élevé.

Fig. 1.

Fig. 2.

Fig. 3.

Fig. 3a.

Fig. 4.

# Fig. 5.

# Fig. 6.

Fig. 7.

Fig. 7a.

Fig. 8.

4

Fig 9

0 089 151

**Fig. 10.**

Fig. II

Fig. 12

216
238
211, 212
239
240
242
241

Fig. 13a

211, 212

Fig. 13b

238
238
236
236
244
239
241

Fig. 14a

238
236
244
238
239
239

Fig. 14b

236
236
238
239
244
239

Fig. 14c

Fig. 15

Fig. 16

*Fig. 17.*

*Fig. 18.*

Fig.19.

Fig. 19a.

# Fig. 20

# Fig.20a    Fig.20b

Fig. 21

Fig. 21a

Fig. 22

Fig. 22a

Fig. 22b

*12*

Fig. 22c.

*12*

Fig. 22d.

A

139

131

130

129

129

129

129

*Fig. 23*

A

*Fig. 23a*

137

*Fig. 23c*

*Fig. 23b*

130/131

133

139

135